# EUROPEAN PATENT SPECIFICATION

(11) **EP 2 738 226 B1**
(45) Date of publication and mention of the grant of the patent: **05.09.2018**
(21) Application number: 12816973.7
(22) Date of filing: 12.07.2012
(51) Int. Cl.: C09D 11/30, C09D 11/101

(54) **PHOTOCURABLE INK JET INK AND ELECTRONIC CIRCUIT BOARD**
LICHTHÄRTBARE TINTENSTRAHLDRUCKTINTE UND ELEKTRONISCHE LEITERPLATTE
ENCRE POUR JET D'ENCRE PHOTODURCISSABLE ET CARTE DE CIRCUITS IMPRIMÉS ÉLECTRONIQUE

(30) Priority: 26.07.2011 JP 2011163128
(43) Date of publication of application: 04.06.2014
(73) Proprietor: JNC Corporation, Chiyoda-ku Tokyo 100-8105 (JP)
(72) Inventor: HIROTA, Takayuki, Ichihara-shi Chiba 290-8551 (JP); SUGIHARA, Katsuyuki, Ichihara-shi Chiba 290-8551 (JP); YAMAUCHI, Kazuki, Ichihara-shi Chiba 290-8551 (JP); HORIKAWA, Yuya, Ichihara-shi Chiba 290-8551 (JP); KONDOU, Kyouko, Ichihara-shi Chiba 290-8551 (JP)
(74) Representative: Wills, Andrew Jonathan
(86) International application number: PCT/JP2012/067782
(87) International publication number: WO 2013/015125

(56) References cited:
- EP-A1- 1 876 209
- WO-A1-2011/064977
- JP-A- 2007 332 333
- JP-A- 2009 173 712
- JP-A- 2009 197 194
- JP-A- 2010 215 798
- US-A1- 2008 075 882
- US-A1- 2008 131 618
- US-A1- 2009 081 420

## Description

### Technical Field

The present invention relates to a photocurable inkjet ink suitably used for producing, for example, a display device such as a liquid crystal display device or an electroluminescence (EL) display device, and an electronic circuit substrate such as a printed wiring board, a flexible wiring board, a semiconductor package substrate or a solar cell substrate. More specifically, the invention relates to a photocurable inkjet ink suitable for a cover lay film, a solder resist or the like for protecting a conductor such as metallic wiring forming a predetermined circuit pattern, and an electrode, and a substrate.

### Background Art

Upon producing an electronic circuit substrate such as a printed wiring board, a flexible wiring board, a semiconductor package substrate or a solar cell substrate, a polymer-based cover lay film has been used for a long time as a protective film for protecting a conductor such as metallic wiring forming a predetermined circuit pattern, and an electrode, and a substrate. Heat resistance and adhesion with a substrate are generally required for the cover lay film.

As a method for arranging the cover lay film on the substrate and the conductor, a method is generally applied in which one surface of the cover lay film is processed into predetermined shape, an adhesive is applied to the processed surface, followed by position adjustment, and then thermocompression bonding is made using a press or the like.

The method has occasionally caused a problem on working efficiency and positional accuracy in an operation of processing the cover lay film, applying the adhesive on the processed surface or making position adjustment.

Therefore, a proposal has been made so far to a method for applying a photosensitive composition onto a substrate and a conductor to form a protective film for the purpose of improvement of the problems (JP S45-115541 A (Patent literature No. 1), JP S51-40922 A (Patent literature No. 2) or JP 2004-156012 A (Patent literature No. 3), for example).

However, production of an electronic circuit substrate or the like after forming the protective film using such a photosensitive composition requires processing of the protective film into a predetermined pattern form by performing pattern exposure using a photoresist or the like, etching treatment, development and so forth, which has required a number of steps, time and cost.

In order to solve the problems described above, a method is disclosed for directly applying a photosensitive composition on a substrate in a pattern form by an inkjet method to form a protective film forming a predetermined pattern (JP 2010-143982 A (Patent literature No. 4) or JP 2010-215798 A (Patent literature No. 5), for example). The method does not require pattern exposure, etching treatment, development and so forth that have been required so far, and thus is expected as a method having an advantage of a small amount of equipment investment and a small loss of material.

### Citation List

### Patent Literature

Patent literature No. 1: JP S45-115541 A.
Patent literature No. 2: JP S51-40922 A.
Patent literature No. 3: JP 2004-156012 A.
Patent literature No. 4: JP 2010-143982 A.
Patent literature No. 5: JP 2010-215798 A

### Summary of Invention

### Technical Problem

However, a protective film obtained from a composition described in Patent Literature Nos. 4 and 5 tends to be poor in heat resistance and adhesion with a substrate, particularly, with a silicon substrate or a glass substrate, and therefore use has been limited in some cases.

The invention has been made in view of the problem described above, and an object is to provide a photocurable inkjet ink having excellent jettability and photocurability, and the photocurable inkjet ink allowing formation of a cured film having excellent heat resistance and excellent adhesion with a substrate, particularly, with a silicon substrate or a glass substrate.

### Solution to Problem

The present inventors have found that a photocurable inkjet ink comprising a monofunctional polymerizable monomer component comprising at least two kinds of specific monofunctional polymerizable monomers, and a polymerization initiator is excellent in jettability and photocurability, and allows formation of a cured film having excellent heat resistance and adhesion with a substrate, particularly, with a silicon substrate and a glass substrate, and thus have completed the invention.

Namely, the invention includes items described below.

Item 1. A photocurable inkjet ink, comprising a monofunctional polymerizable monomer component (A) comprising a monofunctional polymerizable monomer (a-1) having a condensed cyclic hydrocarbon group or polycyclic hydrocarbon group, and a monofunctional polymerizable monomer (a-2) having a monocyclic hydrocarbon group, and a polymerization initiator (C).

Item 2. The photocurable inkjet ink according to item 1, further comprising a polyfunctional polymerizable monomer (B).

Item 3. The photocurable inkjet ink according to item 1 or 2, wherein the monomer (a-1) includes a monofunctional polymerizable monomer having a 7-50C organic group having a condensed cyclic hydrocarbon group or polycyclic hydrocarbon group.

Item 4. The photocurable inkjet ink according to any one of items 1 to 3, wherein the monomer (a-1) includes a monofunctional polymerizable monomer represented by formula (1) below: 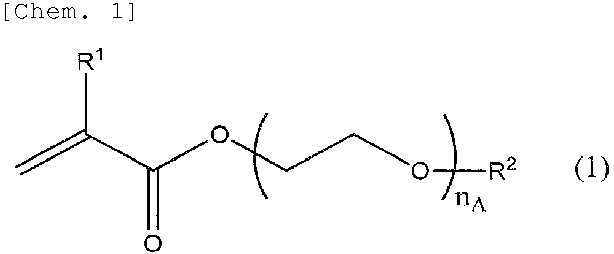 wherein, in formula (1), R¹ is hydrogen or methyl, R² is a monovalent 7-30C organic group having a condensed cyclic hydrocarbon group or polycyclic hydrocarbon group, and n_{A} is an integer from 0 to 10.

Item 5. The photocurable inkjet ink according to item 4, wherein R² in formula (1) above is a group represented by any one of formulas (2) to (5) below: 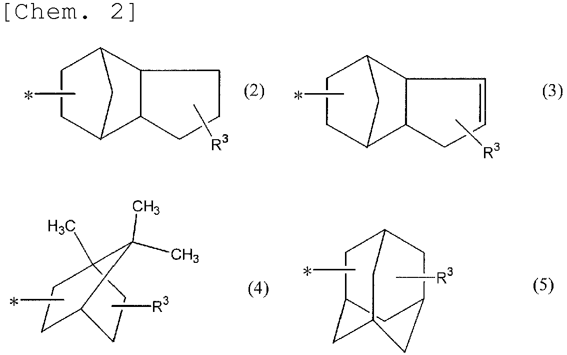 wherein, in formulas (2) to (5), R³ is each independently hydrogen or alkyl having 1 to 6 carbons, and a symbol * is a bonding hand.

Item 6. The photocurable inkjet ink according to any one of items 1 to 5, wherein the monomer (a-2) includes a monofunctional polymerizable monomer having a 4-50C organic group having a monocyclic hydrocarbon group.

Item 7. The photocurable inkjet ink according to any one of items 1 to 6, wherein the monomer (a-2) includes a monofunctional polymerizable monomer represented by formula (6) below: 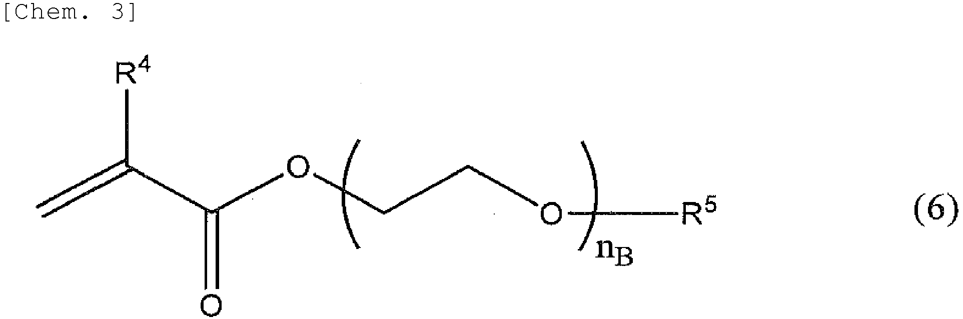 wherein, in formula (6), R⁴ is hydrogen or methyl, R⁵ is a monovalent 4-30C organic group having a monocyclic hydrocarbon group, and n_{B} is an integer from 0 to 10.

Item 8. The photocurable inkjet ink according to item 7, wherein R⁵ in formula (6) above is a group represented by formula (7) below: 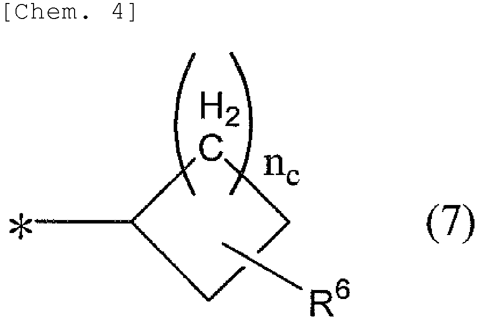 wherein, in formula (7), R⁶ is hydrogen or alkyl having 1 to 6 carbons, n_{C} is an integer from 1 to 21, and a symbol * is a bonding hand.

Item 9. The photocurable inkjet ink according to item 7 or 8, wherein R⁵ in formula (6) above is a group represented by formula (8) below: 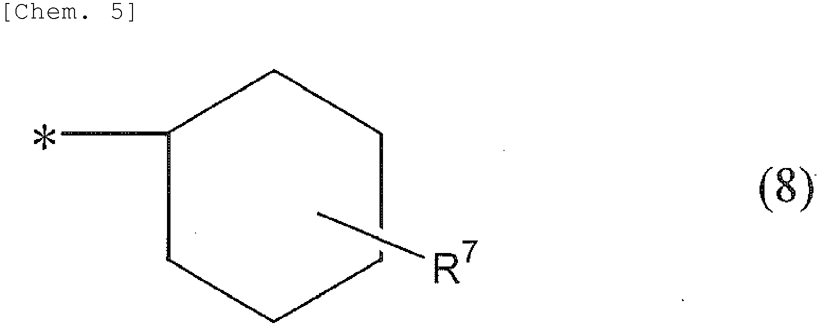 wherein, in formula (8), R⁷ is hydrogen or alkyl having 1 to 6 carbons, and a symbol * is a bonding hand.

Item 10. The photocurable inkjet ink according to any one of items 2 to 9, wherein the monomer (B) is at least one kind of compounds selected from tricyclodecane dimethanol di(meth)acrylate, bisphenol F ethylene oxide-modified di(meth)acrylate, bisphenol A ethylene oxide-modified di(meth)acrylate, isocyanuric acid ethylene oxide-modified di(meth)acrylate, pentaerythritol tri(meth)acrylate, pentaerythritol tetra(meth)acrylate, dipentaerythritol tri(meth)acrylate, dipentaerythritol tetra (meth)acrylate, dipentaerythritol penta(meth)acrylate, dipentaerythritol hexa(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate, a compound represented by formula (9) below and a compound represented by formula (10) below: 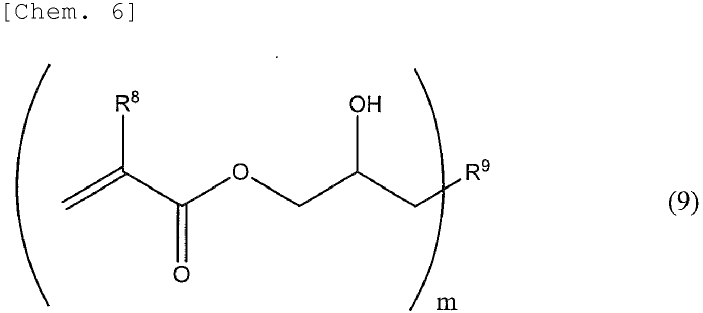 wherein, in formula (9), R⁸ is hydrogen or methyl, R⁹ is an m-valent organic group, and m is an integer from 2 to 10: 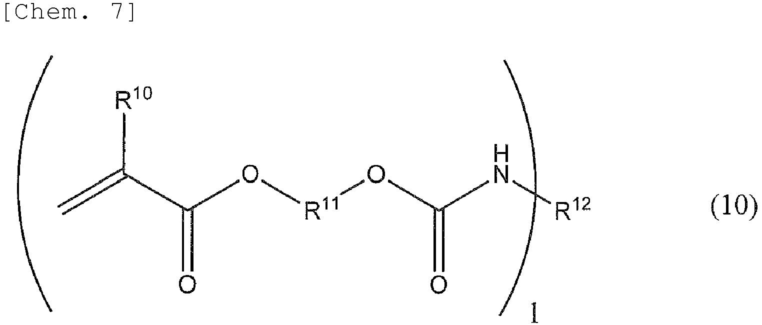 wherein, in formula (10), R¹⁰ is hydrogen or methyl, R¹¹ is a divalent organic group, R¹² is a l-valent organic group, and l is an integer from 2 to 20.

Item 11. The photocurable inkjet ink according to any one of items 1 to 10, wherein the polymerization initiator (C) is at least one kind of compounds selected from the group of 1-hydroxycyclohexyl phenyl ketone, 2-methyl-1-[4-(methylthio)phenyl]-2-morpholinopropane-1-one, 2-benzyl-2-dimethylamino-1-(4-morpholinophenyl)-1-butanone, 2-hydroxy-1-{4-[4-(2-hydroxy-2-methyl-propionyl)-benzyl]pheny l}-2-methyl-propane-1-one, 2,2-dimethoxy-1,2-diphenylethane-1-one, bis(2,4,6-trimethylbenzoyl)phenylphosphine oxide, 2,4,6-trimethylbenzoyldiphenylphosphine oxide, 2-hydroxy-2-methyl-1-phenyl-propane-1-one, 1-[4-(2-hydroxyethoxy)-phenyl]-2-hydroxy-2-methyl-1-propane-1 -one, 2-(4-methylbenzyl)-2-(dimethylamino)-1-(4-morpholinophenyl)bu tane-1-one, a mixture of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester, 1-[4-(phenylthio)phenyl]-1,2-octanedione 2-(O-benzoyloxime)], 1-[9-ethyl-6-(2-methylbenzoyl)-9H-carbazole-3-yl]-ethanone 1-(O-acetyloxime) and methyl benzoylformate.

Item 12. The photocurable inkjet ink according to any one of items 2 to 11, wherein the component (A) comprises at least one kind of compounds selected from the group of compounds represented by formulas (11) to (14) below, and cyclohexyl (meth)acrylate,
the monomer (B) is at least one kind of compounds selected from the group of bisphenol F ethylene oxide-modified di (meth) acrylate, bisphenol A ethylene oxide-modified di(meth)acrylate, trimethylolpropane tri(meth)acrylate and tricyclodecane dimethanol di(meth)acrylate, and
the polymerization initiator (C) is
2-(4-methylbenzyl)-2-(dimethylamino)-1-(4-morpholinophenyl)bu tane-1-one: 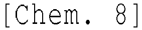 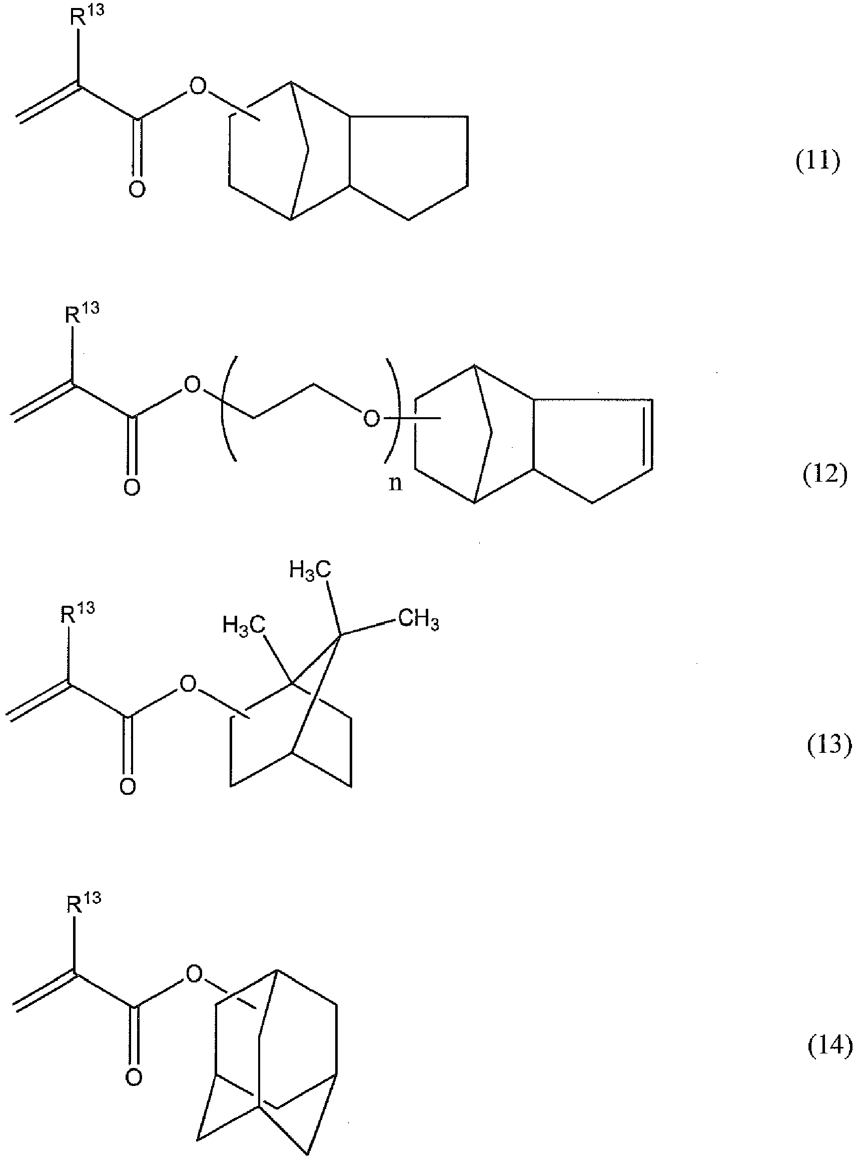 wherein, in formulas (11) to (14), R¹³ is hydrogen or methyl, and n is 0 or 1.

Item 13. The photocurable inkjet ink according to item 12, wherein the component (A) further comprises at least one kind of compounds selected from the group of tetrahydrofurfuryl (meth)acrylate and n-butyl (meth)acrylate.

Item 14. The photocurable inkjet ink according to any one of items 2 to 13, wherein, based on 100% by weight of a sum of weight of component (A), monomer (B) and polymerization initiator (C), component (A) is contained in an amount of 30 to 80% by weight, monomer (B) is contained in an amount of 10 to 55% by weight, and polymerization initiator (C) is contained in an amount of 1 to 35% by weight.

Item 15. The photocurable inkjet ink according to any one of items 2 to 14, wherein, based on 100% by weight of a sum of weight of component (A), monomer (B) and polymerization initiator (C), component (A) is contained in an amount of 40 to 75% by weight, monomer (B) is contained in an amount of 15 to 50% by weight, and polymerization initiator (C) is contained in an amount of 5 to 30% by weight.

Item 16. A cured film, obtained by curing the photocurable inkjet ink according to any one of items 1 to 15.

Item 17. An electronic circuit substrate, including the cured film according to item 16.

Item 18. A method for producing an electronic circuit substrate, comprising:
(step 1) a step for applying the photocurable inkjet ink according to any one of items 1 to 15 on a substrate according to an inkjet method to form a coating film; and
(step 2) a step for irradiating the coating film obtained in step 1 with light to cure the coating film and to form a cured film on the substrate.

Item 19. An electronic circuit substrate produced by the method for producing the same according to item 18.

Item 20. The electronic circuit substrate according to item 17 or 19, wherein the electronic circuit substrate includes a solar cell substrate.

### Advantageous Effects of Invention

A photocurable inkjet ink according to the invention is excellent in jettability and photocurability. Moreover, a cured film obtained from the ink is excellent in heat resistance and adhesion with a substrate, particularly, with a silicon substrate and a glass substrate, and can be suitably used as a protective film or an insulating film for an electronic circuit substrate, particularly, a solar cell substrate. Moreover, the cured film obtained from the photocurable inkjet ink according to the invention also has sufficient adhesion with a conductor such as metallic wiring and an electrode. Furthermore, according to the photocurable inkjet ink of the invention, the electronic circuit substrate can be produced without needing a complicated step and a large amount of expenses.

### Description of Embodiments

"(Meth)acrylate" herein is used for presenting either one or both of acrylate and methacrylate, and "(meth) acryloyl" herein is used for presenting either one or both of acryloyl and methacryloyl.

### Photocurable inkjet ink

A photocurable inkjet ink according to the invention (hereinafter, also referred to as "ink of the invention") comprises a monofunctional polymerizable monomer component (A) comprising a monofunctional polymerizable monomer (a-1) having a condensed cyclic hydrocarbon group or polycyclic hydrocarbon group, and a monofunctional polymerizable monomer (a-2) having a monocyclic hydrocarbon group, and a polymerization initiator (C) .

The ink of the invention is formed of comprising the specific component (A) and the polymerization initiator (C), and therefore is excellent in jettability and photocurability, and allows formation of a cured film that is excellent in heat resistance and adhesion with a substrate, particularly, with a silicon substrate, a glass substrate and a silicon substrate or a glass substrate on which a conductor such as metallic wiring and an electrode is formed.

The ink of the invention further preferably comprises a polyfunctional polymerizable monomer (B), and also when necessary, any other component such as a flame retardant, a resin having a phenolic hydroxyl group, a melamine resin, an epoxy compound, an oxetane compound, a curing agent, a surfactant, a coloring agent, a polymerization inhibitor and a solvent.

The ink of the invention may be colorless or may be colored.

### 1. Component (A)

The ink of the invention comprises a monofunctional polymerizable monomer component (A) comprising a monofunctional polymerizable monomer (a-1) having a condensed cyclic hydrocarbon group or polycyclic hydrocarbon group, and a monofunctional polymerizable monomer (a-2) having a monocyclic hydrocarbon group, thereby allowing formation of the cured film that is excellent in adhesion with a substrate, particularly, with a silicon substrate, a glass substrate and a silicon substrate or a glass substrate on which a conductor such as metallic wiring and an electrode is formed.

In the invention, the content of the component (A) is, based on 100% by weight of a sum of weight of component (A), monomer (B) and polymerization initiator (C), preferably, 30 to 80% by weight, because an ink having good jettability is obtained, and a cured film having excellent heat resistance, adhesion with the substrate and the like with a good balance is obtained, and further preferably, 40 to 75% by weight.

### 1.1. Monofunctional polymerizable monomer (a-1) having a condensed cyclic hydrocarbon group or polycyclic hydrocarbon group

As the monofunctional polymerizable monomer (a-1) having a condensed cyclic hydrocarbon group or polycyclic hydrocarbon group is not particularly restricted, but is preferably a monofunctional polymerizable monomer having a 7-50C organic group having a condensed cyclic hydrocarbon group or polycyclic hydrocarbon group, and further preferably, a monofunctional polymerizable monomer having a 7-30C organic group having a condensed cyclic hydrocarbon group or polycyclic hydrocarbon group.

The "monofunctional polymerizable monomer" refers to a monomer having one (meth)acryloyl group or vinyl group in one molecule.

Moreover, the "condensed cyclic hydrocarbon group" refers to a hydrocarbon (consisting of a carbon atom and a hydrogen atom) group having two or more cycles, and the hydrocarbon group having at least one carbon atom constituting a certain cycle and simultaneously constituting any other cycle, and the "polycyclic hydrocarbon group" refers to a hydrocarbon group having two or more cycles, and the hydrocarbon group in which a certain cycle and any other cycle are bonded with a single bond or alkylene having 1 to 10 carbons.

Furthermore, the "7-50C organic group having a condensed cyclic hydrocarbon group or polycyclic hydrocarbon group" refers to a group including n_{A} pieces of repeating units and R² other than a (meth) acryloyl group in the compound represented by formula (1), for example.

As the monomer (a-1), use of the compound represented by the formula (1) is preferred in view of obtaining a cured film having excellent heat resistance, adhesion with a substrate and the like.

In the formula (1), R² is a monovalent 7-30C organic group having a condensed cyclic hydrocarbon group or polycyclic hydrocarbon group, and preferably, a nonpolar and monovalent 7-30C organic group having a condensed cyclic hydrocarbon group or polycyclic hydrocarbon group, and further preferably, a group represented by any one of the formulas (2) to (5).

Moreover, as n_{A}, 0 or 1 is preferred.

In the formulas (2) to (5), as R³, hydrogen is preferred. In addition, a symbol * is a bonding hand and bonds with O- at a right terminal in the formula (1).

As the monomer (a-1), at least one kind of compounds selected from the group of compounds (I) below, or the like is preferred.

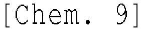

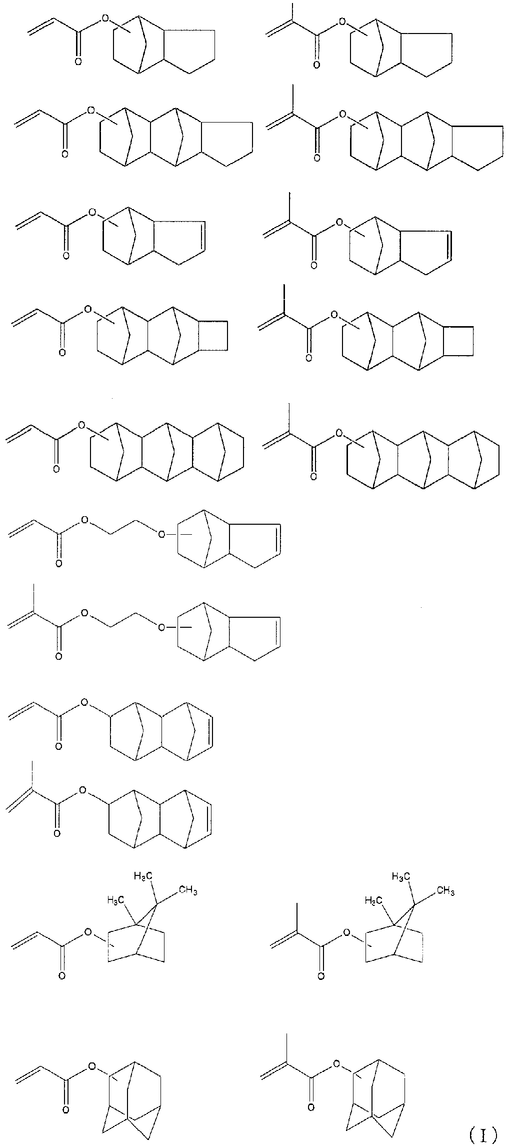

Among the compounds, compounds (15) to (24) below are further preferred in consideration of adhesion of the resulting cured film with a substrate, and heat resistance thereof.

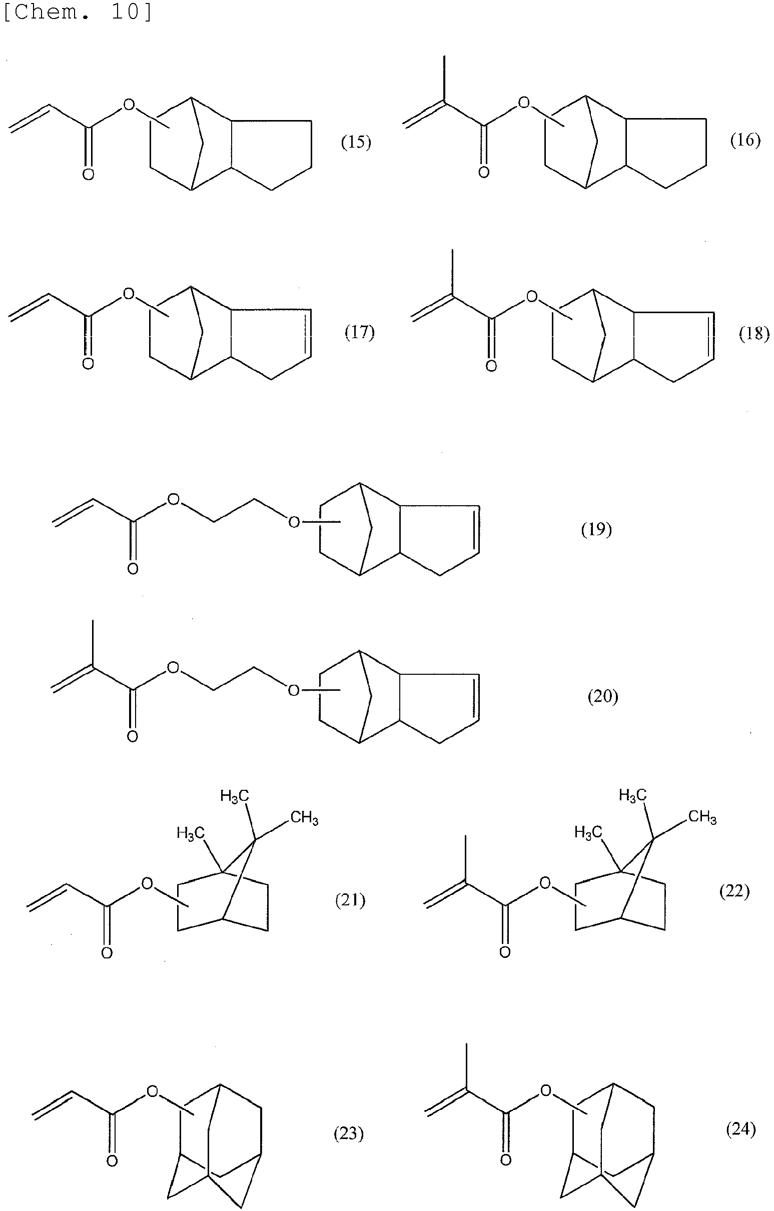

The monomer (a-1) may be at least one kind of compounds selected from the compounds above or the like, or may be a mixture of two or more kinds of the compounds.

As the monomer (a-1), a compound produced by a publicly known method may be used, or a commercial item may also be used, such as dicyclopentanyl acrylate (trade name; FANCRYL FA-513AS: Hitachi Chemical Co., Ltd.), dicyclopentanyl methacrylate (trade name; FANCRYL FA-513M: Hitachi Chemical Co., Ltd.), dicyclopentenyl acrylate (trade name; FANCRYL FA-511AS: Hitachi Chemical Co., Ltd.), dicyclopentenyl methacrylate (trade name; FANCRYL FA-511M: Hitachi Chemical Co., Ltd.), dicyclopentenyloxyethyl acrylate (trade name; FANCRYL FA-512AS: Hitachi Chemical Co., Ltd.), dicyclopentenyloxyethyl methacrylate (trade name; FANCRYL FA-512M: Hitachi Chemical Co., Ltd.), isobornyl acrylate (trade name; IB-XA: Kyoeisha Chemical Co., Ltd.), isobornyl methacrylate (trade name; IBXMA: Kyoeisha Chemical Co., Ltd.) and 1-adamantyl methacrylate (trade name; Adamantate M-104: Idemitsu Kosan Co., Ltd.).

In the ink of the invention, the content of the monomer (a-1) is, based on 100% by weight of a sum of weight of component (A), monomer (B) and polymerization initiator (C), preferably, 5 to 50% by weight, because a cured film having excellent heat resistance, adhesion with a substrate and the like with a good balance is obtained, further preferably, 7.5 to 45% by weight, and still further preferably, 10 to 40% by weight.

### 1.2. Monofunctional polymerizable monomer (a-2) having a monocyclic hydrocarbon group

The monofunctional polymerizable monomer (a-2) having a monocyclic hydrocarbon group is not particularly restricted, but is preferably a monofunctional polymerizable monomer having a 4-50C organic group having a monocyclic hydrocarbon group, and further preferably, a monofunctional polymerizable monomer having a 4-30C organic group having a monocyclic hydrocarbon group.

The "monocyclic hydrocarbon group" refers to a hydrocarbon group having one cycle (excluding an aromatic ring).

Moreover, the "4-50C organic group having a monocyclic hydrocarbon group" refers to a group including n_{B} pieces of repeating units and R⁵ other than a (meth)acryloyl group in the compound represented by the formula (6), for example.

As the monomer (a-2), use of the compound represented by the formula (6) is preferred in view of obtaining a cured film having excellent heat resistance and adhesion with a substrate.

In the formula (6), R⁵ is a monovalent 4-30C organic group having a monocyclic hydrocarbon group, and in view of adhesion of the resulting cured film with a substrate, particularly, with a silicon substrate, and the like, preferably is a nonpolar and monovalent 4-30C organic group having a monocyclic hydrocarbon group, further preferably, a group represented by the formula (7), and still further preferably, a group represented by the formula (8) .

Moreover, as n_{B}, 0 or 1 is preferred.

In the formula (7), as R⁶, hydrogen is preferred, and as n_{C}, an integer from 2 to 4 is preferred. In addition, a symbol * is a bonding hand and bonds with O- at a right terminal in the formula (6) .

In the formula (8), as R⁷, hydrogen is preferred. In addition, a symbol * is a bonding hand and bonds with O- at a right terminal in the formula (6).

As the monomer (a-2), at least one kind of compounds selected from the group of compounds (II) below, or the like is preferred.

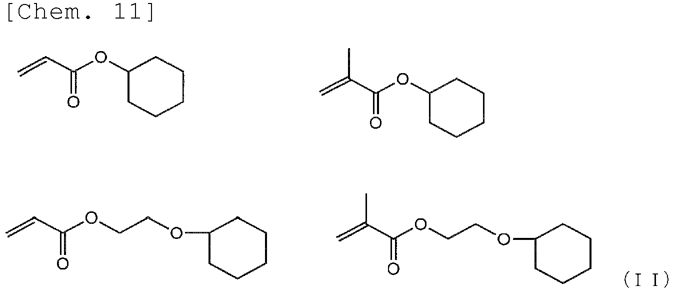

Among the compounds, compounds (25) and (26) below are further preferred in consideration of adhesion of the resulting cured film with a substrate, and heat resistance thereof.

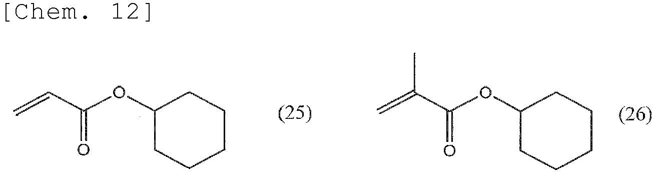

The monomer (a-2) may be at least one kind of compounds selected from the compounds described above, or may be a mixture of two or more kinds of the compounds.

As the monomer (a-2), a compound produced by a publicly known method may be used, or a commercial item may also be used, such as cyclohexyl acrylate (trade name; V #155: Osaka Organic Chemical Industry Ltd.) and cyclohexyl methacrylate (trade name; Light ester CH: Kyoeisha Chemical Co., Ltd.).

In the ink of the invention, the content of the monomer (a-2) is, based on 100% by weight of a sum of weight of component (A), monomer (B) and polymerization initiator (C), preferably, 5 to 60% by weight, because a cured film having excellent heat resistance and adhesion with a substrate with a good balance is obtained, further preferably, 7.5 to 55% by weight, and still further preferably, 10 to 50% by weight.

### 1.3. Monofunctional polymerizable monomer other than monomers (a-1) and (a-2)

The component (A) is not particularly limited, if the component (A) comprises the monomer (a-1) and the monomer (a-2), and may comprise a monofunctional polymerizable monomer other than the monomers (a-1) and (a-2).

Specific examples of the monofunctional polymerizable monomer other than the monomers (a-1) and (a-2) include n-hexyl (meth)acrylate, tetrahydrofurfuryl (meth)acrylate, caprolactone-modified tetrahydrofurfuryl (meth)acrylate, N-acryloyloxyethylhexahydrophthalimide, cyclic imide acrylate, benzyl (meth)acrylate, phenoxyethyl (meth)acrylate, monohyrdoxyethylphthalate (meth)acrylate, methyl (meth)acrylate, ethyl (meth)acrylate, isopropyl (meth)acrylate, isoamyl (meth)acrylate, isobutyl (meth)acrylate, n-butyl (meth)acrylate, t-butyl (meth)acrylate, pentyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, dodecyl (meth)acrylate, lauryl (meth)acrylate, stearyl (meth)acrylate, 2-hydroxyethyl (meth)acrylate, 2-hydroxypropyl (meth)acrylate, 4-hydroxybutyl (meth)acrylate, 2-methoxyethyl (meth)acrylate, 2-ethoxyethyl (meth)acrylate, 3-methoxybutyl (meth)acrylate, butoxyethyl (meth)acrylate, ethoxydiethyleneglycol (meth)acrylate, methoxydipropyleneglycol (meth)acrylate, dipropyleneglycol (meth)acrylate, ethyldiethyleneglycol (meth)acrylate, glycerol mono(meth)acrylate, trifluoroethyl (meth)acrylate, glycidyl (meth)acrylate, 3,4-epoxycyclohexyl (meth)acrylate, methylglycidyl (meth)acrylate, 3-methyl-3-(meth)acryloxymethyl oxetane, 3-ethyl-3-(meth)acryloxymethyl oxetane, 3-methyl-3-(meth)acryloxyethyl oxetane, 3-ethyl-3-(meth)acryloxyethyl oxetane, 2-trifluoromethyl-3-(meth)acryloxymethyl oxetane, 4-trifluoromethyl-2-(meth)acryloxymethyl oxetane, (3-ethyl-3-oxetanyl)methyl (meth)acrylate, N-vinylformamide, (meth)acrylamide, N,N-dimethyl (meth)acrylamide, N,N-diethyl (meth)acrylamide, N,N-dimethylaminopropyl (meth)acrylamide, N-isopropyl (meth)acrylamide, N-hydroxyethyl (meth)acrylamide and 2-(meth)acryloyloxyethyl acid phosphate.

Among the compounds, tetrahydrofurfuryl (meth)acrylate, n-butyl (meth)acrylate, t-butyl (meth)acrylate, 2-hydroxyethyl (meth)acrylate, 4-hydroxybutyl (meth)acrylate, 2-methoxyethyl (meth)acrylate, 2-ethoxyethyl (meth)acrylate, dipropyleneglycol (meth)acrylate, and N,N-diethyl (meth)acrylamide are preferred.

The monofunctional polymerizable monomer other than the monomers (a-1) and (a-2) may be at least one kind of compounds selected from the compounds described above or the like, or a mixture of two or more kinds of the compounds.

In the ink of the invention, the content of the monofunctional polymerizable monomer other than the monomers (a-1) and (a-2) is, based on 100% by weight of a sum of weight of component (A), monomer (B) and polymerization initiator (C), preferably, 0.1 to 45% by weight, because an ink having good jettability is obtained, and a cured film having excellent adhesion with a silicon substrate is obtained, further preferably, 0.5 to 40% by weight, and still further preferably, 1.0 to 35% by weight.

### 2. Polyfunctional polymerizable monomer (B)

The ink of the invention may comprise a polyfunctional polymerizable monomer (B) for improving photocurability of the ink, and for increasing heat resistance of a cured film obtained from the ink, and so forth. The monomer (B) is not particularly restricted, as long as the advantageous effects of the invention are not adversely affected, and is preferably a compound that does not adversely affect jettability and photocurability of the ink of the invention, and adhesion of a cured film obtained from the ink with a substrate, and allows an increase of heat resistance of the cured film obtained from the ink.

The "polyfunctional polymerizable monomer" refers to a monomer having two or more (meth) acryloyl groups in one molecule. As the polymerizable group, a (meth) acryloyl group is preferred.

Specific examples of the monomer (B) include tricyclodecane dimethanol di(meth)acrylate, bisphenol F ethylene oxide-modified di(meth)acrylate, bisphenol A ethylene oxide-modified di(meth)acrylate, isocyanuric acid ethylene oxide-modified di(meth)acrylate, polyethylene glycol di(meth)acrylate, polypropylene glycol di(meth)acrylate, pentaerythritol di(meth)acrylate, dipentaerythritol di(meth)acrylate, pentaerythritol di(meth)acrylate monostearate, trimethylolpropane di(meth)acrylate, 1,4-butanediol di(meth)acrylate, 1,6-hexanediol di(meth)acrylate, 1,9-nonanediol di(meth)acrylate, 1,4-cyclohexanedimethanol di(meth)acrylate, 2-n-butyl-2-ethyl-1,3-propanediol di(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, trimethylolpropane tri(meth)acrylate, ethylene oxide-modified trimethylolpropane tri(meth)acrylate, propylene oxide-modified trimethylolpropane tri(meth)acrylate, epichlorohydrin-modified trimethylolpropane tri(meth)acrylate, glycerol tri(meth)acrylate, ethylene oxide-modified glycerol tri(meth)acrylate, propylene oxide-modified glycerol tri(meth)acrylate, epichlorohydrin-modified glycerol tri(meth)acrylate, ditrimethylolpropane tetra(meth)acrylate, diglycerol tetra(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate and the compounds represented by the formulas (9) and (10).

In the formula (9), R⁹ is an m-valent organic group. Preferred examples of the organic group include a 1-100C organic group that may have a substituent, a 3-100C organic group having a monocyclic hydrocarbon group and a 6-100C organic group having an aromatic hydrocarbon group. In addition, -CH₂- in the 1-100C organic group and the 3-100C organic group having a monocyclic hydrocarbon group may be replaced by -O-, -NH-, -CO- or the like, and -CH₂CH₂- in the 1-100C organic group and the 3-100C organic group having a monocyclic hydrocarbon group may be replaced by -CH=CH- or -C≡C-. However, replacement of a plurality of consecutive -CH₂- or -CH₂CH₂- by an identical group is not preferred, and -NHCOO- in the combination described above is excluded. Moreover, the substituent preferably includes alkyl having 1 to 6 carbons, hydroxy and carboxyl. Then, m is an integer from 2 to 10, and preferably, an integer from 2 to 5.

In the formula (10), R¹¹ is a divalent organic group, and preferably, a divalent alkylene having 1 to 20 carbons. R¹² is a l-valent organic group. Preferred examples of the organic group include a 1-100C organic group that may have a substituent, a 3-100C organic group having a monocyclic hydrocarbon group and a 6-100C organic group having an aromatic hydrocarbon group. In addition, -CH₂- in the 1-100C organic group and the 3-100C organic group having a monocyclic hydrocarbon group may be replaced by -O-, -NH-, -CO- or the like, and -CH₂CH₂- in the 1-100C organic group and the 3-100C organic group having a monocyclic hydrocarbon group may be replaced by -CH=CH- or -C≡C-. However, replacement of a plurality of consecutive -CH₂- or -CH₂CH₂- by an identical group is not preferred. Moreover, the substituent preferably includes alkyl having 1 to 6 carbons, hydroxy and carboxyl. Then, l is an integer from 2 to 20, and preferably, an integer from 2 to 10.

Among the compounds, a preferred compound includes tricyclodecane dimethanol di(meth)acrylate, bisphenol F ethylene oxide-modified di(meth)acrylate, bisphenol A ethylene oxide-modified di(meth)acrylate, isocyanuric acid ethylene oxide-modified di(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate and the compounds represented by the formulas (9) and (10).

The monomer (B) may be one kind of compound selected from the compounds described above or the like, or a mixture of two or more kinds of the compounds.

In the ink of the invention, the content of the monomer (B) is, based on 100% by weight of a sum of weight of component (A), monomer (B) and polymerization initiator (C), preferably, 10 to 55% by weight, because an ink having excellent photocurability is obtained, and a cured film having excellent heat resistance and adhesion with a substrate is obtained, further preferably, 15 to 50% by weight, still further preferably, 17.5 to 45% by weight, and particularly preferably, 18 to 40% by weight.

In addition, a compound represented by the formula (III) below is not included in the monofunctional polymerizable monomer other than the monomers (a-1) and (a-2) described above, and the polyfunctional polymerizable monomer (B).

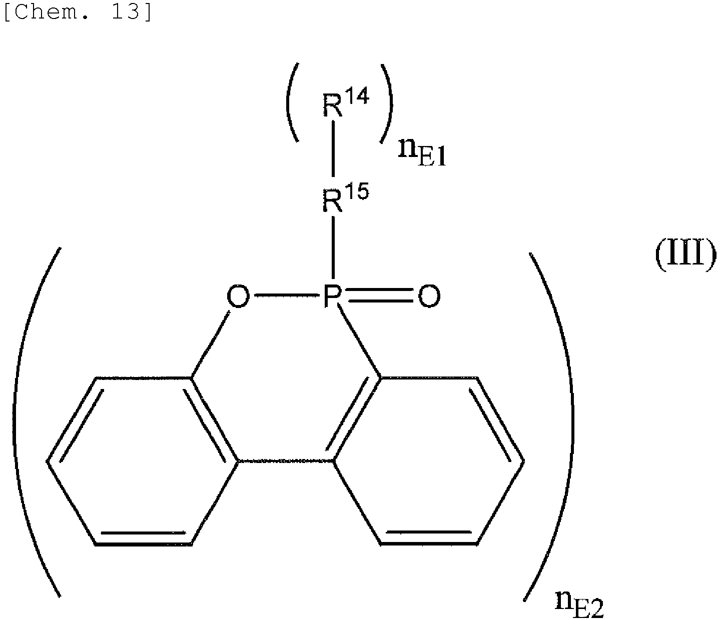

In the formula (III), R¹⁴ is independently a monovalent organic group having a (meth)acryloyl group, R¹⁵ is a (n_{E1}+n_{E2})-valent organic group, and n_{E1} and n_{E2} each are an integer of 1 or more, and satisfies an expression: n_{E1} + n_{E2} ≤ 10.

### 3. Polymerization initiator (C)

The ink of the invention comprises a polymerization initiator (C) for curing the ink by light.

The polymerization initiator (C) is preferably a compound that generates a radical by irradiation with ultraviolet light or visible light.

Specific examples of the polymerization initiator (C) include benzophenone, Michler's ketone, 4,4'-bis(diethylamino)benzophenone, xanthone, thioxanthone, isopropyl xanthone, 2,4-diethylthioxanthone, 2-ethylanthraquinone, acetophenone, 2-hydroxy-2-methylpropiophenone, 2-hydroxy-2-methyl-4'-isopropylpropiophenone, 1-hydroxycyclohexyl phenyl ketone (CAS Registry Number: 947-19-3, trade name: IRGACURE 184, BASF Japan Ltd.), isopropyl benzoin ether, isobutyl benzoin ether, 2,2-diethoxyacetophenone, 2,2-dimethoxy-2-phenylacetophenone, camphorquinone, benzanthrone, 2-methyl-1-[4-(methylthio)phenyl]-2-morpholinopropane-1-one (CAS Registry Number: 71868-10-5, trade name: IRGACURE 907, BASF Japan Ltd.), 2-benzyl-2-dimethylamino-1-(4-morpholinophenyl)-1-butanone (CAS Registry Number: 119313-12-1, trade name: IRGACURE 369, BASF Japan Ltd.), ethyl 4-dimethylamino benzoate, isoamyl 4-dimethylamino benzoate, 4,4'-di(t-butylperoxycarbonyl)benzophenone, 3,4,4'-tri(t-butylperoxycarbonyl)benzophenone, 3,3',4,4'-tetra(t-butylperoxycarbonyl)benzophenone, 3,3',4,4'-tetra(t-hexylperoxycarbonyl)benzophenone, 3,3'-di(methoxycarbonyl)-4,4'-di(t-butylperoxycarbonyl)benzop henone, 3,4'-di(methoxycarbonyl)-4,3'-di(t-butylperoxycarbonyl)benzop henone, 4,4'-di(methoxycarbonyl)-3,3'-di(t-butylperoxycarbonyl)benzop henone, 2-(4-methoxystyryl)-4,6-bis(trichloromethyl)-s-triazine, 2-(3,4-dimethoxystyryl)-4,6-bis(trichloromethyl)-s-triazine, 2-(2,4-dimethoxystyryl)-4,6-bis(trichloromethyl)-s-triazine, 2-(2-methoxystyryl)-4,6-bis(trichloromethyl)-s-triazine, 2-(4-pentyloxystyryl)-4,6-bis(trichloromethyl)-s-triazine, 4-[p-N,N-di(ethoxycarbonylmethyl)]-2,6-di(trichloromethyl)-s-triazine, 1,3-bis(trichloromethyl)-5-(2-chlorophenyl)-s-triazine, 1,3-bis(trichloromethyl)-5-(4-methoxyphenyl)-s-triazine, 2-(p-dimethylaminostyryl)benzoxazole, 2-(p-dimethylaminostyryl)benzothiazole, 2-mercaptobenzothiazole, 3,3'-carbonyl bis(7-diethylaminocoumarin), 2-(o-chlorophenyl)-4,4',5,5'-tetraphenyl-1,2'-biimidazole, 2,2'-bis(2-chlorophenyl)-4,4',5,5'-tetrakis(4-ethoxycarbonylp henyl)-1,2'-biimidazole, 2,2'-bis(2,4-dichlorophenyl)-4,4',5,5'-tetraphenyl-1,2'-biimi dazole, 2,2'-bis(2,4-dibromophenyl)-4,4',5,5'-tetraphenyl-1,2'-biimid azole, 2,2'-bis(2,4,6-trichlorophenyl)-4,4',5,5'-tetraphenyl-1,2'-bi imidazole, 3-(2-methyl-2-dimethylaminopropionyl)carbazole, 3,6-bis(2-methyl-2-morpholinopropionyl)-9-n-dodecylcarbazole, bis(η⁵-2,4-cyclopentadiene-1-yl)-bis(2,6-difluoro-3-(1H-pyrro le-1-yl)-phenyl)titanium (CAS Registry Number: 125051-32-3, trade name: IRGACURE 784, BASF Japan Ltd.), bis(2,4,6-trimethylbenzoyl)phenylphosphine oxide (CAS Registry Number: 162881-26-7, trade name: IRGACURE 819, BASF Japan Ltd.), 2,4,6-trimethylbenzoyldiphenylphosphine oxide (CAS Registry Number: 75980-60-8, trade name: LUCIRIN TPO, BASF Japan Ltd.), a mixture of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester (trade name: IRGACURE 754, BASF Japan Ltd.), 2-(4-methylbenzyl)-2-(dimethylamino)-1-(4-morpholinophenyl)bu tane-1-one (CAS Registry Number: 119344-86-4, trade name: IRGACURE 379, BASF Japan Ltd.), 1-[4-(phenylthio)phenyl]-1,2-octanedione 2-(O-benzoyloxime)] (CAS Registry Number: 253585-83-0, trade name: IRGACURE OXE 01, BASF Japan Ltd.), 1-[9-ethyl-6-(2-methylbenzoyl)-9H-carbazole-3-yl]-ethanone 1-(O-acetyloxime) (CAS Registry Number: 478556-66-0, trade name: IRGACURE OXE 02, BASF Japan Ltd.), 2-hydroxy-1-{4-[4-(2-hydroxy-2-methyl-propionyl)-benzyl]pheny l}-2-methyl-propane-1-one (CAS Registry Number: 474510-57-1, trade name: IRGACURE 127, BASF Japan Ltd.), 2,2-dimethoxy-1,2-diphenylethane-1-one (CAS Registry Number: 24650-42-8, trade name: IRGACURE 651, BASF Japan Ltd.), 2-oxo-2-phenylacetic acid methyl ester, 2-hydroxy-2-methyl-1-phenyl-propane-1-one (CAS Registry Number: 7473-98-5, trade name: DAROCUR 1173, BASF Japan Ltd.), 1-[4-(2-hydroxyethoxy)-phenyl]-2-hydroxy-2-methyl-1-propane-1 -one (CAS Registry Number: 106797-53-9, trade name: IRGACURE 2959, BASF Japan Ltd.) and methyl benzoylformate (trade name: DAROCUR MBF, BASF Japan Ltd.).

Among the compounds, a preferred compound includes 1-hydroxycyclohexyl phenyl ketone, 2-methyl-1-[4-(methylthio)phenyl]-2-morpholinopropane-1-one, 2-benzyl-2-dimethylamino-1-(4-morpholinophenyl)-1-butanone, bis(η⁵-2,4-cyclopentadiene-1-yl)-bis(2,6-difluoro-3-(1H-pyrro le-1-yl)-phenyl)titanium, bis(2,4,6-trimethylbenzoyl)phenylphosphine oxide, 2,4,6-trimethylbenzoyldiphenylphosphine oxide, a mixture of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester, 2-(4-methylbenzyl)-2-(dimethylamino)-1-(4-morpholinophenyl)bu tane-1-one, 1-[4-(phenylthio)phenyl]-1,2-octanedione 2-(O-benzoyloxime)], 1-[9-ethyl-6-(2-methylbenzoyl)-9H-carbazole-3-yl]-ethanone 1-(O-acetyloxime), 2-hydroxy-1-{4-[4-(2-hydroxy-2-methyl-propionyl)-benzyl]pheny l}-2-methyl-propane-1-one, 2,2-dimethoxy-1,2-diphenylethane-1-one, 2-oxo-2-phenylacetic acid methyl ester, 2-hydroxy-2-methyl-1-phenyl-propane-1-one, methyl benzoylformate and 1-[4-(2-hydroxyethoxy)-phenyl]-2-hydroxy-2-methyl-1-propane-1 -one, and a further preferred compound includes 1-hydroxycyclohexyl phenyl ketone, 2-methyl-1-[4-(methylthio)phenyl]-2-morpholinopropane-1-one, 2-benzyl-2-dimethylamino-1-(4-morpholinophenyl)-1-butanone, 2-hydroxy-1-{4-[4-(2-hydroxy-2-methyl-propionyl)-benzyl]pheny l}-2-methyl-propane-1-one, 2,2-dimethoxy-1,2-diphenylethane-1-one, bis(2,4,6-trimethylbenzoyl)phenylphosphine oxide, 2,4,6-trimethylbenzoyldiphenylphosphine oxide, 2-hydroxy-2-methyl-1-phenyl-propane-1-one, 1-[4-(2-hydroxyethoxy)-phenyl]-2-hydroxy-2-methyl-1-propane-1 -one, 2-(4-methylbenzyl)-2-(dimethylamino)-1-(4-morpholinophenyl)bu tane-1-one, a mixture of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester, 1-[4-(phenylthio)phenyl]-1,2-octanedione 2-(O-benzoyloxime)], 1-[9-ethyl-6-(2-methylbenzoyl)-9H-carbazole-3-yl]-ethanone 1-(O-acetyloxime) and methyl benzoylformate.

The polymerization initiator (C) may be one kind of compound, or a mixture of two or more kinds of the compounds.

In the invention, the content of polymerization initiator (C) is, based on 100% by weight of a sum of weight of component (A), monomer (B) and polymerization initiator (C), preferably, 1 to 35% by weight, because an ink having high sensitivity to ultraviolet light is obtained, further preferably, 5 to 30% by weight, still further preferably, 7.5 to 25% by weight, and particularly preferably, 8 to 20% by weight.

### 4. Preferred ink

The ink of the invention is preferably a photocurable inkjet ink comprising the component (A), the monomer (B) and the polymerization initiator (C) in view of excellent jettability and photocurability and obtaining a cured film having excellent heat resistance and adhesion with a substrate, particularly, with a silicon substrate and a glass substrate, and the like. The ink is further preferably a photocurable inkjet ink in which: the component (A) comprises at least one kind of compounds selected from the group of compounds represented by the formulas (11) to (14), cyclohexyl(meth)acrylate, and when necessary, at least one kind of compounds selected from the group of tetrahydrofurfuryl (meth)acrylate and n-butyl (meth)acrylate; the monomer (B) is at least one kind of compounds selected from the group of bisphenol F ethylene oxide-modified di (meth) acrylate, bisphenol A ethylene oxide-modified di(meth)acrylate, trimethylolpropane tri(meth)acrylate and tricyclodecane dimethanol di(meth)acrylate; and
the polymerization initiator (C) is 2-(4-methylbenzyl)-2-(dimethylamino)-1-(4-morpholinophenyl)bu tane-1-one.

The ink of the invention contains, based on 100% by weight of the sum of weight of the component (A), the monomer (B) and the polymerization initiator (C), preferably, the component (A) in an amount of 30 to 80% by weight, the monomer (B) in an amount of 10 to 55% by weight and the polymerization initiator (C) in an amount of 1 to 35% by weight, and further preferably, the component (A) in an amount of 40 to 75% by weight, the monomer (B) in an amount of 15 to 50% by weight, and the polymerization initiator (C) in an amount of 5 to 30% by weight.

The content of the component (A), the monomer (B) and the polymerization initiator (C) being in the range described above is preferred, because an ink having excellent jettability and photocurability is obtained, and a cured film having excellent heat resistance and adhesion with a substrate, particularly, with a silicon substrate, a glass substrate, and a silicon substrate or a glass substrate on which a conductor such as a metallic wiring and an electrode is formed can be formed.

### 5. Any other component

In order to improve various kinds of characteristics, the ink of the invention may also comprise any other component such as a flame retardant, a resin having a phenolic hydroxyl group, a melamine resin, an epoxy compound, an oxetane compound, a curing agent, a surfactant, a coloring agent, a polymerization inhibitor and a solvent within the range in which the advantageous effects of the invention is not adversely affected.

### 5.1. Flame retardant

The ink of the invention may also comprise a flame retardant. The flame retardant is not particularly limited as long as the flame retardant is a compound that allows provision of flame retardancy, but an organic phosphorus-based flame retardant is preferably used from a viewpoint of low toxicity, low pollution, safety and so forth.

Specific examples of the organic phosphorus-based flame retardant include triphenyl phosphate, tricresyl phosphate, trixylenyl phosphate, cresyl phenyl phosphate, 2-ethylhexyl diphenyl phosphate, 9,10-dihydro-9-oxa-10-phosphaphenanthrene-10-oxide, 10-(2,5-dihydroxyphenyl)-10H-9-oxa-10-phosphaphenanthrene-10-oxide and condensed 9,10-dihydro-9-oxa-10-phosphaphenanthrene-10-oxide.

Among the flame retardants, condensed 9,10-dihydro-9-oxa-10-phosphaphenanthrene-10-oxide represented by the formula (III) is preferred, because a cured film on which bleeding-out of the flame retardant is hard to be caused even when the film is exposed to high temperature conditions is obtained, and HFA-3003 (trade name; Showa Denko K.K.) that is condensed 9,10-dihydro-9-oxa-10-phosphaphenanthrene-10-oxide represented by formula (IV) below is particularly preferred.

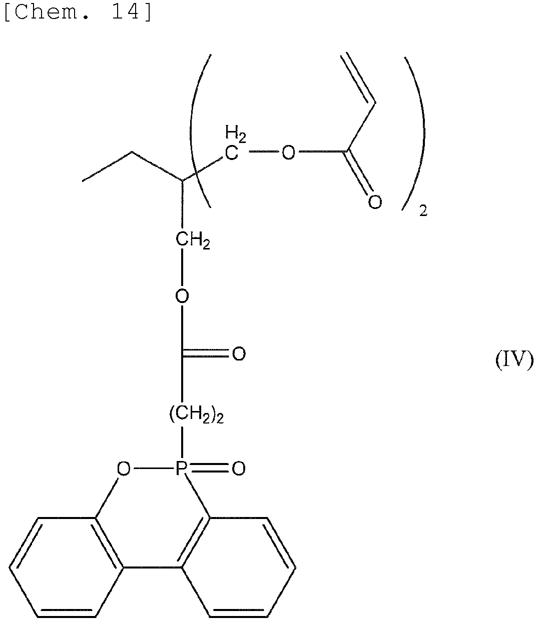

In the ink of the invention, the flame retardant may be one kind of compound, or a mixture of two or more kinds of compounds.

As the flame retardant, a compound produced by a publicly known method may be used, or a commercial item such as HFA-3003 available from Showa Denko K.K. may also be used.

In the ink of invention, the content of the flame retardant is, based on 100 parts by weight of a sum of weight of component (A), monomer (B) and polymerization initiator (C), preferably, 5 to 30 parts by weight, because a cured film having excellent flame retardancy is obtained, further preferably, 10 to 30 parts by weight, still further preferably, 10 to 20 parts by weight, and particularly preferably, 15 to 20 parts by weight.

### 5.2. Resin having a phenolic hydroxyl group

Into the ink of the invention, a resin having a phenolic hydroxyl group may be incorporated in order to improve heat resistance of the resulting cured film.

As the resin having a phenolic hydroxyl group, a novolak resin obtained by a condensation reaction between aldehydes and an aromatic compound having a phenolic hydroxyl group, a homopolymer (including a hydrogenated product) of vinyl phenol, a vinyl phenol-based copolymer (including a hydrogenated product) of vinyl phenol with a compound that is copolymerizable with the vinyl phenol, or the like is preferably used.

Specific examples of the aromatic compound having a phenolic hydroxyl group include phenol, o-cresol, m-cresol, p-cresol, o-ethylphenol, m-ethylphenol, p-ethylphenol, o-butylphenol, m-butylphenol, p-butylphenol, 3,4-xylenol, 2,3-xylenol, 2,4-xylenol, 2,5-xylenol, 2,6-xylenol, 3,5-xylenol, 2,3,5-trimethylphenol, 3,4,5-trimethylphenol, p-phenylphenol, resorcinol, hydroquinone, hydroquinone monomethyl ether, pyrogallol, bisphenol A, bisphenol F, terpene skeleton-containing diphenol, gallic acid, gallate, α-naphthol and β-naphthol.

Specific examples of the aldehydes include formaldehyde, paraformaldehyde, furfural, benzaldehyde, nitrobenzaldehyde and acetaldehyde.

Specific examples of the compound that is copolymerizable with the vinyl phenol include (meth)acrylic acid or a derivative thereof, styrene or a derivative thereof, maleic anhydride, vinyl acetate and acrylonitrile.

Specific examples of the resin having a phenolic hydroxyl group include Resitop PSM-6200 (trade name; Gunei Chemical Industry Co., Ltd.), Shonol BRG-555 (trade name; Showa Denko K.K.), and MARUKA LYNCUR MS-2P, MARUKA LYNCUR CST70 and MARUKA LYNCUR PHM-C (trade names; Maruzen Petrochemical Co., Ltd.).

The resin having a phenolic hydroxyl group that can be used for the ink of the invention may be one kind of compound, or a mixture of two or more kinds of the compounds.

In the ink of invention, the content of the resin having a phenolic hydroxyl group is, based on 100 parts by weight of a sum of weight of component (A), monomer (B) and polymerization initiator (C), preferably, 0.5 to 20 parts by weight, because heat resistance of the resulting cured film is improved, and in consideration of a balance with other characteristics such as adhesion with a substrate, further preferably, 0.5 to 10 parts by weight, and still further preferably, 0.5 to 7 parts by weight.

### 5.3. Melamine resin

Into the ink of the invention, a melamine resin may be incorporated in order to improve heat resistance of the resulting cured film.

The melamine resin is not particularly limited as long as the resin is produced by polycondensation of melamine and formaldehyde, and specific examples thereof include a condensate of methylol melamine, etherified methylol melamine, benzoguanamine, methylol benzoguanamine, etherified methylol benzoguanamine and so forth, and among the resins, a condensate of methylol melamine is preferred.

Specific examples of commercial items of the melamine resin include Nikalac MW-30, MW-30HM, MW-390, MW-100LM and MX-750LM (trade names; Sanwa Chemical Co., Ltd.).

The melamine resin that can be used for the ink of the invention may be one kind of compound, or a mixture of two or more kinds of the compounds.

In the ink of invention, the content of the melamine resin is, based on 100 parts by weight of a sum of weight of component (A), monomer (B) and polymerization initiator (C), preferably, 0.5 to 20 parts by weight, because heat resistance of the resulting cured film is improved, and in consideration of a balance with other characteristics such as adhesion with a substrate, further preferably, 0.5 to 10 parts by weight, and still further preferably, 0.5 to 7 parts by weight.

### 5.4. Epoxy compound

Into the ink of the invention, an epoxy compound may be incorporated in order to improve heat resistance of the resulting cured film and adhesion thereof with a substrate.

The epoxy compound is not particularly limited as long as the compound has at least one of structure represented by formula (2-1) below in one molecule.

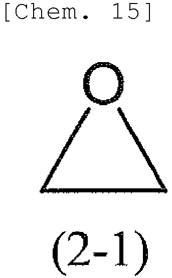

Specific examples of the epoxy compound include a epoxy compound of a novolak type (a phenol-novolak type and a cresol-novolak type), a bisphenol A type, a bisphenol F type, a hydrogenated bisphenol A type, a hydrogenated bisphenol F type, a bisphenol S type, a trisphenolmethane type, a trihydroxy phenylmethane type, a tetraphenylolethane type, abixylenol type, and a biphenol type, an alicyclic epoxy compound, a heterocyclic epoxy compound, and an epoxy compound having a dicyclopentadiene skeleton or a naphthalene skeleton, include, preferably, a epoxy compound of a novolak type, a bisphenol A type and a bisphenol F type, and among the compounds, further preferably, a epoxy compound of a bisphenol A type and a bisphenol F type.

As the epoxy compound, a compound produced by a publicly known method may be used, or a commercial item may also be used. Specific examples of the commercial item include a bisphenol A type epoxy compound such as jER 828, ditto 834, ditto 1001 and ditto 1004 (trade names; Mitsubishi Chemical Corporation), Epiclon 840, ditto 850, ditto 1050 and ditto 2055 (trade names; DIC, Inc.), Epotote YD-011, ditto YD-013, ditto YD-127 and ditto YD-128 (trade names; NIPPON STEEL CHEMICAL CO., LTD.), D.E.R. 317, ditto 331, ditto 661 and ditto 664 (trade names; Dow Chemical Japan Limited), Araldite 6071, ditto 6084, ditto GY250 and ditto GY260 (trade names; Huntsman Japan KK), Sumi-Epoxy ESA-011, ditto ESA-014, ditto ELA-115 and ditto ELA-128 (trade names; Sumitomo Chemical Co., Ltd.) and A.E.R. 330, ditto 331, ditto 661 and ditto 664 (trade names; Asahi Kasei E-materials Corporation);
a novolak type epoxy compound such as jER 152 and 154 (trade names; Mitsubishi Chemical Corporation), D.E.R. 431 and ditto 438 (trade names; Dow Chemical Japan Limited), Epiclon N-730, ditto N-770 and ditto N-865 (trade names; DIC, Inc.), Epotote YDCN-701 and ditto YDCN-704 (trade names; NIPPON STEEL CHEMICAL CO., LTD.), Araldite ECN1235, ditto ECN1273 and ditto ECN1299 (trade names; Huntsman Japan KK), XPY307, EPPN-201, EOCN-1025, EOCN-1020, EOCN-104S and RE-306 (trade names; Nippon Kayaku Co., Ltd.), Sumi-Epoxy ESCN-195X and ditto ESCN-220 (trade names; Sumitomo Chemical Co., Ltd.) and A.E.R. ECN-235 and ditto ECN-299 (trade names; Asahi Kasei E-materials Corporation);
a bisphenol F type epoxy compound such as Epiclon 830 (trade name; DIC, Inc.), jER 807 (trade name; Mitsubishi Chemical Corporation), Epotote YDF-170, YDF-175, YDF-2001 and YDF-2004(trade names; NIPPON STEEL CHEMICAL CO., LTD.) and Araldite XPY306 (trade name; Huntsman Japan KK);
a hydrogenated bisphenol A type epoxy compound such as Epotote ST-2004, ditto ST-2007 and ditto ST-3000 (trade names; NIPPON STEEL CHEMICAL CO., LTD.);
a cycloaliphatic epoxy compound such as Celloxide 2021P (trade name; Daicel Chemical Industries, Ltd.) and Araldite CY175 and ditto CY179 (trade names; Huntsman Japan KK);
a trihydroxy phenylmethane type epoxy compound such as YL-933 (trade name; Mitsubishi Chemical Corporation) and EPPN-501 and EPPN-502 (trade names; Dow Chemical Japan Limited);
a bixylenol type or biphenol type epoxy compound or a mixture thereof, such as YL-6056, YX-4000 and YL-6121 (trade names;
Mitsubishi Chemical Corporation);
a bisphenol S type epoxy compound such as EBPS-200 (trade name; Nippon Kayaku Co., Ltd.), EPX-30 (trade name; ADEKA Corporation) and EXA-1514 (trade name; DIC, Inc.);
a bisphenol A novolak type epoxy compound such as jER 157S (trade name; Mitsubishi Chemical Corporation);
a tetraphenylolethane type epoxy compound such as YL-931 (trade name; Mitsubishi Chemical Corporation), and Araldite 163 (trade name; Huntsman Japan KK);
a heterocyclic epoxy compound such as Araldite PT810 (trade name; Huntsman Japan KK) and TEPIC (trade name; Nissan Chemical Industries, Ltd.);
a naphthalene group-containing epoxy compound such as HP-4032, EXA-4750 and EXA-4700 (trade names; DIC, Inc.);
an epoxy compound having a dicyclopentadiene skeleton, such as HP-7200, HP-7200H and HP-7200HH (trade names; DIC, Inc.); and a trisphenolmethane type epoxy compound, such as Techmore VG3101L (trade name; Mitsui Chemicals, Inc.) which is represented by formula (V) below.

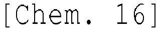

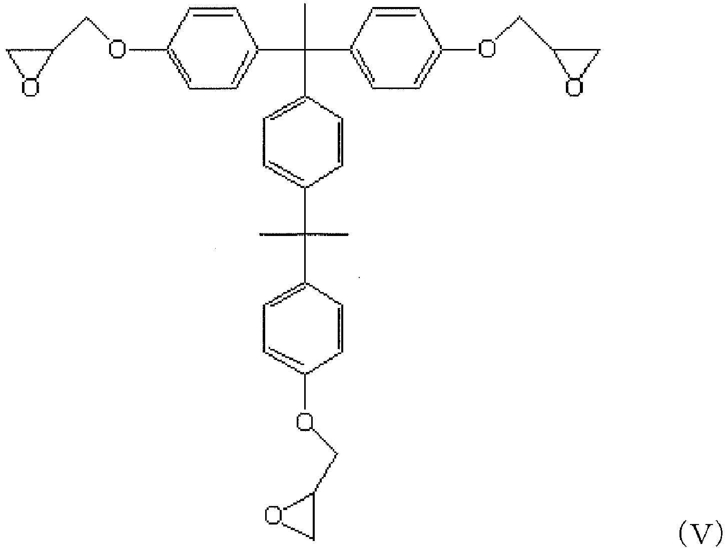

The epoxy resin that can be used for the ink of the invention may be one kind of compound, or a mixture of two or more kinds of the compounds.

In the ink of invention, the content of the epoxy compound is, based on 100 parts by weight of a sum of weight of component (A), monomer (B) and polymerization initiator (C), preferably, 0.5 to 20 parts by weight, because heat resistance of the resulting cured film and adhesion thereof with a substrate are improved, further preferably, 0.5 to 10 parts by weight, and still further preferably, 0.5 to 7 parts by weight.

### 5.5. Oxetane compound

Into the ink of the invention, an oxetane compound may be incorporated in order to improve heat resistance of the resulting cured film and adhesion thereof with a substrate.

The oxetane compound is not particularly limited as long as the compound has at least one of structure represented by formula (2-2) below in one molecule.

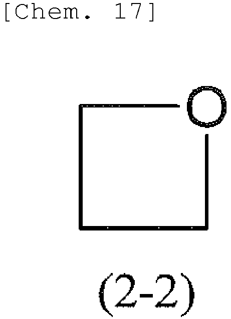

Specific examples of the oxetane compound include a monofunctional type oxetane compound and a polyfunctional type oxetane compound. Specific examples include xylylene bisoxetane.

As the oxetane compound, a compound produced by a publicly known method may be used, or a commercial item may also be used. Specific examples of the commercial item include a monofunctional type oxetane compound such as OXT-101, OXT-211 and OXT-212 (trade names; Toagosei Co., Ltd.), and a polyfunctional type oxetane compound such as OXT-121 and OXT-221 (trade names; Toagosei Co., Ltd.) .

The oxetane compound that can be used for the ink of the invention may be one kind of compound, or a mixture of two or more kinds of the compounds.

In the ink of invention, the content of the oxetane compound is, based on 100 parts by weight of a sum of weight of component (A), monomer (B) and polymerization initiator (C), preferably, 0.5 to 20 parts by weight, because heat resistance of the resulting cured film and adhesion thereof with a substrate are improved, further preferably, 0.5 to 10 parts by weight, and still further preferably, 0.5 to 7 parts by weight.

### 5.6. Curing agent

When the ink of the invention contains an epoxy compound or an oxetane compound, a curing agent may be added for further improving heat resistance of the resulting cured film and adhesion thereof with a substrate.

When the ink of the invention contains an epoxy compound, specific examples of a preferred curing agent include an acid anhydride-based curing agent an amine-based curing agent, and when the ink contains an oxetane compound, specific examples of a preferred curing agent include a catalyst type curing agent.

Specific examples of the acid anhydride type curing agent include maleic anhydride, tetrahydrophthalic anhydride, hexahydrophthalic anhydride, methylhexahydrophthalic anhydride, hexahydrotrimellitic anhydride, phthalic anhydride, trimellitic anhydride, pyromellitic anhydride, methyltetrahydrophthalic anhydride, 3,6-endomethylene tetrahydrophthalic anhydride, hexachloroendomethylene tetrahydrophthalic anhydride, methyl-3,6-endomethylene tetrahydrophthalic anhydride and a styrene-maleic anhydride copolymer.

Specific examples of the amine-based curing agent include diethylenetriamine, triethylenetetramine, tetraethylenepentamine, dicyandiamide, polyamideamine(polyamide resin), a ketimine compound, isophoronediamine, m-xylenediamine, m-phenylenediamine, 1,3-bis(aminomethyl)cyclohexane, N-aminoethylpiperazine, 4,4'-diaminodiphenylmethane, 4,4'-diamino-3,3'-diethyldiphenylmethane and diaminodiphenylsulfone.

Specific examples of the catalyst type curing agent include a tertiary amine compound, an imidazole compound, an onium salt and a crown ether complex.

The curing agent that can be used for the ink of the invention may be one kind of compound, or a mixture of two or more kinds of the compounds.

In the ink of invention, the content of the curing agent is, based on 100 parts by weight of a sum of weight of component (A), monomer (B) and polymerization initiator (C), preferably, 0.5 to 20 parts by weight, because heat resistance of the resulting cured film and adhesion thereof with a substrate are improved, further preferably, 0.5 to 10 parts by weight, and still further preferably, 0.5 to 7 parts by weight.

### 5.7. Surfactant

The ink of the invention may also comprise a surfactant in order to improve, for example, wettability to a (ground) substrate, or film surface uniformity of the resulting cured film. Specific examples of the surfactant include a silicone-based surfactant, an acrylic surfactant and a fluorine-based surfactant.

Specific examples of the surfactant include a silicone-based surfactant such as BYK-300, ditto 306, ditto 335, ditto 310, ditto 341, ditto 344 and ditto 370 (trade names; BYK-Chemie Japan K.K.), an acrylic surfactant such as BYK-354, ditto 358N and ditto 361N (trade names; BYK-Chemie Japan K.K.), and a fluorine-based surfactant such as DFX-18, Futargent 250 and ditto 251 (trade names; Neos Co., Ltd.), and Megafac F-475, F-477, F-553 and F-554 (trade names; DIC, Inc.).

Furthermore, the surfactant being a compound having at least one photoactive functional group is preferred, because an ink having high photocurability is obtained. The photoactive functional group being at least one kind of group selected from the group of (meth)acryloyl, epoxy and oxetanyl is preferred, because an ink having high photocurability is obtained.

Specific examples of the surfactant having (meth)acryloyl as the photocurable functional group include RS-72K (trade name; DIC, Inc.), BYK UV 3500 and BYK UV 3570 (all: trade names, BYK-Chemie Japan K.K.), and TEGO Rad 2100, TEGO Rad 2220N, TEGO Rad 2250, TEGO Rad 2500, TEGO Rad 2600 and TEGO Rad 2700 (all: trade names, Evonik Degussa Japan Co., Ltd.). Moreover, specific examples of the surfactant having epoxy as the photocurable functional group include RS-211K (trade name; DIC, Inc.).

The surfactant that can be used for the ink of the invention may be one kind of compound, or a mixture of two or more kinds of the compounds.

In the ink of invention, the content of the surfactant is, based on 100 parts by weight of a sum of weight of component (A), monomer (B) and polymerization initiator (C), preferably, 0.001 to 1 part by weight, because film surface uniformity of the resulting cured film is improved, and in consideration of a balance with other characteristics such as heat resistance, further preferably, 0.001 to 0.5 parts by weight, and still further preferably, 0.001 to 0.3 parts by weight.

### 5.8. Coloring agent

The ink of the invention may also comprise a coloring agent in order to facilitate identification of a cured film from a substrate upon inspecting a state of the cured film obtained by, for example, applying the ink onto the substrate to allow curing. As the coloring agent, a dye, a pigment and so forth are preferred.

The coloring agent that can be used for the ink of the invention may be one kind of compound, or a mixture of two or more kinds of the compounds.

In the ink of invention, the content of the coloring agent is, based on 100 parts by weight of a sum of weight of component (A), monomer (B) and polymerization initiator (C), preferably, 0.1 to 5.0 parts by weight, because inspection of the resulting cured film is facilitated, and in consideration of a balance with other characteristics such as heat resistance, further preferably, 0.1 to 4.0 parts by weight, and still further preferably, 0.1 to 3.0 parts by weight.

### 5.9. Polymerization inhibitor

The ink of the invention may also comprise a polymerization inhibitor in order to improve storage stability. Specific examples of the polymerization inhibitor include 4-methoxyphenol, hydroquinone and phenothiazine. Use of phenothiazine among the inhibitors is preferred because an ink having a small change (increase) of viscosity even in storage for a long period of time is obtained.

The polymerization inhibitor that can be used for the ink of the invention may be one kind of compound, or a mixture of two or more kinds of the compounds.

In the ink of invention, the content of the polymerization inhibitor is, based on 100 parts by weight of a sum of weight of component (A), monomer (B) and polymerization initiator (C), preferably, 0.01 to 1 part by weight, because an ink having a small change of viscosity even in storage for a long period of time is obtained, and in consideration of a balance with other characteristics such as heat resistance, further preferably, 0.01 to 0.5 parts by weight, and still further preferably, 0.01 to 0.3 parts by weight.

### 5.10. Solvent

The ink of the invention has sufficient jetting characteristics (jettability by an inkjet apparatus) even without comprising a solvent, but in order to further improve the jetting characteristics, may comprise a solvent. The solvent is not particularly restricted as long as the advantageous effects of the invention are not adversely affected, but preferably a solvent which does not adversely affect jettability and photocurability of the ink, and heat resistance of the cured film obtained from the ink and the adhesion thereof with a substrate, and which allows a decrease of viscosity of the ink, and further preferably, has viscosity (at 25°C) in the range of 0.1 to 100 mPa·s.

Use of a solvent having a high boiling point is preferred in coating according to an inkjet method in order to suppress viscosity build-up by volatilization of the solvent upon warming an inkjet head. A solvent having a boiling point of 100 to 300°C is further preferred.

Specific examples of the solvent having a boiling point of 100 to 300°C include butyl acetate, butyl propionate, ethyl lactate, methyl oxyacetate, ethyl oxyacetate, butyl oxyacetate, methyl methoxyacetate, ethyl methoxyacetate, butyl methoxyacetate, methyl ethoxyacetate, ethyl ethoxyacetate, methyl 3-oxypropionate, ethyl 3-oxypropionate, methyl 3-methoxypropionate, ethyl 3-methoxypropionate, methyl 3-ethoxypropionate, ethyl 3-ethoxypropionate, methyl 2-oxypropionate, ethyl 2-oxypropionate, propyl 2-oxypropionate, methyl 2-methoxypropionate, ethyl 2-methoxypropionate, propyl 2-methoxypropionate, methyl 2-ethoxypropionate, ethyl 2-ethoxypropionate, methyl 2-oxy-2-methylpropionate, ethyl 2-oxy-2-methylpropionate, methyl 2-methoxy-2-methylpropionate, ethyl 2-ethoxy-2-methylpropionate, methyl pyruvate, ethyl pyruvate, propyl pyruvate, methyl acetoacetate, ethyl acetoacetate, methyl 2-oxobutanate, ethyl 2-oxobutanate, dioxane, ethylene glycol, diethylene glycol, triethylene glycol, propylene glycol, dipropylene glycol, tripropylene glycol, 1,4-butanediol, ethylene glycol monoisopropyl ether, ethylene glycol monobutyl ether, propylene glycol monomethyl ether, propylene glycol monoethyl ether acetate, propylene glycol monoethyl ether acetate, propylene glycol monopropylether acetate, dipropylene glycol monoethyl ether acetate, dipropylene glycol monobutyl ether acetate, ethylene glycol monobutyl ether acetate, cyclohexanone, cyclopentanone, diethylene glycol monomethyl ether, diethylene glycol monomethyl ether acetate, diethylene glycol monoethyl ether, diethylene glycol monoethyl ether acetate, diethylene glycol monobutyl ether, diethylene glycol monobutyl ether acetate, diethylene glycol dimethyl ether, diethylene glycol diethyl ether, diethylene glycol methyl ethyl ether, toluene, xylene, anisole, γ-butyrolactone, N,N-dimethylacetamide, N-methyl-2-pyrrolidone and dimethylimidazolidinone.

The solvent may be one kind of compound, or a mixture of two or more kinds of the compounds.

In the ink of invention, the content of the solvent is, based on 100 parts by weight of a sum of weight of component (A), monomer (B) and polymerization initiator (C), preferably, 0.1 to 10 parts by weight, because an ink having good jetting characteristics and a good balance with other characteristics is obtained, further preferably, 0.2 to 8 parts by weight, still further preferably, 0.5 to 6 parts by weight and particularly preferably, 1 to 5 parts by weight.

### 6. Method for preparation of an ink

The ink of the invention can be prepared by mixing each component to be a raw material by a publicly known method.

In particular, the ink of the invention is preferably prepared by mixing the component (A) and polymerization initiator (C), and when necessary, the monomer (B) and/or any other component, and filtering the resulting solution using a membrane filter made from, for example, a fluorocarbon resin, and degassing the solution. The thus prepared ink is excellent in jettability by an inkjet apparatus.

The viscosity (at 25°C) of the ink of the invention as measured using a cone-plate type (E-type) viscometer is preferably 200 mPa·s or less, further preferably, 1 to 200 mPa·s, still further preferably, 2 to 150 mPa·s, and particularly preferably, 3 to 100 mPa·s. When the viscosity of the ink of the invention is in the range described above, jetting characteristics by an inkjet apparatus become satisfactory.

### 7. Storage of an ink

When the ink of the invention is stored at 15 to 35°C, a viscosity change (increase) during storage is small, and storage stability is satisfactory.

### 8. Use of an ink

The ink of the invention allows formation of a cured film having excellent heat resistance and adhesion with a substrate, and therefore is suitably used for producing a display device such as a liquid crystal display device or an EL display device, an electronic circuit substrate such as a printed wiring board, a flexible wiring board, a semiconductor package substrate or a solar cell substrate, and also for formation of a cover lay film, a solder resist or the like for protecting a conductor such as metallic wiring forming a predetermined circuit pattern, and an electrode. Moreover, the ink of the invention allows formation of a cured film having, in particular, excellent heat resistance and adhesion with a silicon substrate and a silicon substrate on which a conductor is formed, and therefore is suitably used for producing a solar cell substrate.

### Cured film

The cured film of the invention can be obtained by curing the ink of the invention, and preferably produced by a method including steps 1 and 2 as described below.
(Step 1) a step for applying an ink of the invention on a substrate by an inkjet method to form a coating film.
(Step 2) a step for irradiating the coating film obtained in step 1 with light to cure the coating film and to form a cured film on the substrate.

The inkjet method is not particularly restricted, and a publicly known inkjet method can be applied.

The substrate is not particularly limited as long as the substrate can be an object onto which the ink of the invention is applied, and a shape thereof is not limited to a flat plate form, but may be curved or the like.

The substrate is not particularly limited, and specific examples include a polyester-based resin substrate formed of polyethylene terephthalate (PET), polybutylene terephthalate (PBT) and the like; a polyolefin resin substrate formed of polyethylene, polypropylene and the like; an organic polymer film formed of polyvinyl chloride, a fluorocarbon resin, an acrylic resin, polyamide, polycarbonate, polyimide and the like; cellophane; metallic foil; a laminated film of polyimide and metallic foil; a filler-effective glassine paper or parchment paper, or a paper subjected to a filler treatment by polyethylene, a clay binder, polyvinyl alcohol, starch or carboxy methyl cellulose (CMC); a silicon substrate; and a glass substrate.

The cured film of the invention is particularly excellent in adhesion with a silicon substrate and a glass substrate, and therefore the substrates can be used.

As the substrate, a substrate may be used including one kind or a plurality of kinds of additives selected from the group of an antioxidant, an antidegradant, a filler, an ultraviolet light absorber, an antistatic agent and an electromagnetic wave preventative within the range in which the advantageous effects of the invention are not adversely affected. As the substrate, a substrate may be subjected to, at least partially on a surface of the substrate, and when necessary, surface treatment such as hydrophobic treatment, corona treatment, plasma treatment or blasting, or may be provided with, on the surface, an easy-bonding layer, a protective film for a color filter and a hard coat film.

Thickness of the substrate is not particularly limited, but is ordinarily about 10 micrometers to about 8 millimeters, and is appropriately adjusted depending on a purpose of use, and is preferably 15 micrometers to 7 millimeters, and further preferably, 20 micrometers to 6 millimeters.

Specific examples of the inkjet method include a method (so-called piezoelectric method) for acting mechanical energy on an ink to jet (apply) the ink from an inkjet head, and a coating method (so-called thermal method) for acting thermal energy on an ink to apply the ink.

Application of the inkjet method allows easy applying of the ink of the invention in a predetermined pattern form to form a uniform pattern on a large substrate.

Specific examples of the inkjet head include a head having a heating part formed of one kind or a plurality of kinds of materials selected from the group of a metal and a metal oxide. Specific examples of the metal and the metal oxide include a metal such as Ta, Zr, Ti, Ni and Al, and a metal oxide thereof.

Specific examples of a preferred coater used upon applying using the ink of the invention include an apparatus in which energy corresponding to a coating signal is applied to an ink in an inkjet head having an ink storage part in which the ink is stored, and while generating an ink drop by the energy, applying (drawing) corresponding to the coating signal is made.

The inkjet coater is not limited to a coater in which the inkjet head and the ink storage part are separated, and a coater in which the inkjet head and the ink storage part are undetachably integrated may also be used. Moreover, the ink storage part may be detachably or undetachably integrated to the inkjet head and mounted to a carriage, or provided on a fixed member of the coater. In the latter case, the ink storage part may have a form for supplying the ink to the inkjet head through an ink supply member, for example, a tube.

Temperature upon jetting the ink by the inkjet coater is preferably 10 to 120°C. The viscosity (at the temperature) of the ink of the invention is preferably 1 to 30 mPa·s, further preferably, 2 to 25 mPa·s, and still further preferably, 3 to 20 mPa·s.

When an ink having viscosity (at 25°C) exceeding 30 mPa·s, heating the inkjet head to decrease the viscosity during jetting allows further stable jetting. When the ink is jetted by heating the inkjet head, heating temperature is preferably 40 to 120°C. When the inkjet head is heated, an ink comprising no solvent is preferably used.

Thickness of the coating film obtained may be appropriately selected according to desired use, and is preferably 1 to 20 micrometers, and further preferably, 1 to 10 micrometers.

An exposure amount when upon irradiation with ultraviolet light, visible light or the like may be appropriately adjusted according to the composition of the ink of the invention. When measurement is carried out by Digital UV Intensity Meter UIT-201 attached with Detector UVD-365PD of Ushio, Inc., the exposure amount is preferably about 100 to about 10,000 mJ/cm², further preferably, about 150 to about 5,000 mJ/cm², still further preferably, about 180 to about 3,000 mJ/cm², and particularly preferably, 200 to 2,000 mJ/cm². Wavelength of ultraviolet light, visible light or the like for irradiation is preferably 200 to 500 nanometers, and further preferably, 300 to 450 nanometers.

In addition, an exposure system may be used upon irradiating with light, and the exposure system is preferably an apparatus mounting a high pressure mercury lamp, an ultrahigh pressure mercury lamp, a metal halide lamp, a halogen lamp, a black light lamp or the like to irradiate the film with ultraviolet light, visible light or the like in the range of 200 to 500 nanometers.

Moreover, when necessary, the cured film cured by irradiation with light may be further heated and calcinated. Heating and calcination ordinarily at 80 to 250°C for 10 to 60 minutes allows obtaining of a further strong cured film.

Thickness of the cured film of the invention may be appropriately selected according to desired use, and is preferably 1 to 20 micrometers, and further preferably, 1 to 10 micrometers.

With regard to the cured film of the invention, glass transition temperature measured using DVE-V4 (UBM) is, in view of producing a reliable electronic circuit substrate, solar cell substrate and the like, preferably, 100°C or higher, and further preferably, 100 to 160°C.

In general, a thermal cycle test is conducted as a reliability test in the electronic circuit substrate, the solar cell substrate or the like. In the thermal cycle test, the cured film is placed in a high temperature chamber (about 100°C) and a low temperature chamber (about -40°C) for a predetermined period of time, respectively, and the cycles are repeated a plurality of times, and existence or non-existence of abnormality of the cured film is confirmed. Consequently, in order to obtain the reliable electronic circuit substrate, solar cell substrate or the like, the glass transition temperature of the cured film is desirably within the range described above.

The cured film of the invention is excellent in the heat resistance and the adhesion with a substrate. Therefore, the cured film can be suitably used for a protective film or an insulating film in a display device such as a liquid crystal display device or an EL display device, and an electronic circuit substrate such as a printed wiring board, a flexible wiring board, a semiconductor package substrate or a solar cell substrate. Furthermore, the cured film of the invention is suitably used for a cover lay film, a solder resist or the like for protecting a conductor such as a metallic wiring forming a predetermined circuit pattern, and an electrode.

### Electronic circuit substrate

The electronic circuit substrate of the invention includes the cured film of the invention, and the film is preferably produced by the method including the steps 1 and 2. The electronic circuit substrate includes preferably a solar cell substrate.

The cured film of the invention is excellent in the heat resistance and the adhesion with a substrate, and the like. Therefore, the electronic circuit substrate of the invention serves as an electronic circuit substrate or a solar cell substrate that is excellent in electric characteristics, long-term reliability and so forth.

### Examples

Hereinafter, the invention is further specifically explained by way of Examples, but the invention is not limited to the Examples.

### Example 1

### Preparation of an inkjet ink

As monomer (a-1), 3.0 g of FANCRYL FA-513AS (trade name; Hitachi Chemical Co., Ltd., hereinafter, also referred to as "FA-513AS") being dicyclopentanyl acrylate, as monomer (a-2), 3.0 g of Light ester CH (trade name; Kyoeisha Chemical Co., Ltd., hereinafter, also referred to as "CH-MA") being cyclohexyl methacrylate, as monomer (B), 2.5 g of IRR 214-K (trade name; DAICEL-CYTEC Co., Ltd.) being tricyclodecane dimethanol diacrylate, and as polymerization initiator (C), 1.2 g of IRGACURE 379 (trade name; BASF Japan Ltd.) being 2-(4-methylbenzyl)-2-(dimethylamino)-1-(4-morpholinophenyl)bu tane-1-one are mixed to give a solution, and then the resulting solution was filtered using a membrane filter (Entegris Japan Co., Ltd.) having a pore diameter of 0.2 micrometers and made from an ultra high molecular weight polyethylene (hydrophobic) to give a filtrate (inkjet ink 1).

Viscosity (at 25°C) of inkjet ink 1 was measured using a cone-plate type (E-type) viscometer (TV-22, Toki Sangyo Co., Ltd., the same applies hereinafter), and as a result, the viscosity was 15.7 mPa·s.

### Formation of a cured film

Inkjet ink 1 was injected into inkjet cartridge DMC-11610, the cartridge was loaded in an inkjet apparatus (DMP-2831, FUJIFILM Dimatix, Inc.), and under jetting conditions of 18 V of jetting voltage (piezovoltage), a head temperature of 30°C, driving frequency of 5 kHz and one in the number of coating times, a square pattern having 3 cm in one side was drawn on a silicon wafer (Fujimi Fine Technology Inc.).

On the silicon wafer on which the pattern was formed, ultraviolet light having a wavelength of 365 nm was irradiated using Ultraviolet ray irradiation equipment (J-CURE 1500, JAPAN TECHNOLOGY SYSTEM Corporation) at a UV exposure amount of 1,000 mJ/cm² (measured by Digital UV Intensity Meter UIT-201 attached with Detector UVD-365PD, Ushio, Inc.) to cure the pattern and to give substrate 1 on which a 2.0 µm-thick cured film was formed.

With regard to thickness of the cured film, regarding the silicon wafer on which the cured film was formed, part of the cured film was shaved off with a cutter knife and a resulting step was measured and determined by stylus-based surface profiler P-15 (trade name, KLA-Tencor Japan Corporation).

### Example 2

Inkjet ink 2 was prepared in a manner similar to the operations in Example 1 except that 3.0 g of FANCRYL FA-511AS (trade name; Hitachi Chemical Co., Ltd., hereinafter, also referred to as "FA-511AS") being dicyclopentenyl acrylate was used as a monomer (a-1) in place of 3.0 g of FA-513AS in Example 1.

Viscosity (at 25°C) of inkjet ink 2 was measured using a cone-plate type (E-type) viscometer, and as a result, the viscosity was 15.8 mPa·s.

Inkjet ink 2 was used, and substrate 2 on which a 2.1 µm-thick cured film was formed was obtained in a manner similar to the operations in Example 1.

### Example 3

Inkjet ink 3 was prepared in a manner similar to the operations in Example 1 except that 3.0 g of IB-XA (trade name; Kyoeisha Chemical Co., Ltd.) being isobornyl acrylate was used as a monomer (a-1) in place of 3.0 g of FA-513AS in Example 1.

Viscosity (at 25°C) of inkjet ink 3 was measured using a cone-plate type (E-type) viscometer, and as a result, the viscosity was 14.1 mPa·s.

Inkjet ink 3 was used, and substrate 3 on which a 1.9 µm-thick cured film was formed was obtained in a manner similar to the operations in Example 1.

### Example 4

Inkjet ink 4 was prepared in a manner similar to the operations in Example 1 except that 2.0 g of CH-MA was used in place of 3.0 g of CH-MA, and as component (A) other than monomer (a-1) and monomer (a-2), 1.0 g of Light ester THF (trade name; Kyoeisha Chemical Co., Ltd., hereinafter, also referred to as "THF-MA") being tetrahydrofurfuryl methacrylate was used in Example 1.

Viscosity (at 25°C) of inkjet ink 4 was measured using a cone-plate type (E-type) viscometer, and as a result, the viscosity was 15.7 mPa·s.

Inkjet ink 4 was used, and substrate 4 on which a 2.0 µm-thick cured film was formed was obtained in a manner similar to the operations in Example 1.

### Example 5

Inkjet ink 5 was prepared in a manner similar to the operations in Example 1 except that 2.5 g of M210 (trade name; Toagosei Co., Ltd., hereinafter, also referred to as "M210") being bisphenol A ethylene oxide-modified diacrylate was used as monomer (B) in place of 2.5 g of IRR 214-K in Example 1.

Viscosity (at 25°C) of inkjet ink 5 was measured using a cone-plate type (E-type) viscometer, and as a result, the viscosity was 23.3 mPa·s.

Inkjet ink 5 was used, and substrate 5 on which a 2.2 µm-thick cured film was formed was obtained in a manner similar to the operations in Example 1 except that the head temperature was changed to 35°C.

### Comparative Example 1

Inkjet ink 6 was prepared in a manner similar to the operations in Example 1 except that 6.0 g of FA-513AS was used and CH-MA was not used in Example 1.

Viscosity (at 25°C) of inkjet ink 6 was measured using a cone-plate type (E-type) viscometer, and as a result, the viscosity was 38.7 mPa·s.

Inkjet ink 6 was used, and substrate 6 on which a 2.2 µm-thick cured film was formed was obtained in a manner similar to the operations in Example 1 except that the head temperature was changed to 50°C.

### Comparative Example 2

Inkjet ink 7 was prepared in a manner similar to the operations in Example 1 except that 6.0 g of CH-MA was used and FA-513AS was not used in Example 1.

Viscosity (at 25°C) of inkjet ink 7 was measured using a cone-plate type (E-type) viscometer, and as a result, the viscosity was 8.0 mPa·s.

Inkjet ink 7 was used, and substrate 7 on which a 1.8 µm-thick cured film was formed was obtained in a manner similar to the operations in Example 1.

### Comparative Example 3

Inkjet ink 8 was prepared in a manner similar to the operations in Example 1 except that 3.0 g of THF-MA was used in place of 3.0 g of CH-MA in Example 1.

Viscosity (at 25°C) of inkjet ink 8 was measured using a cone-plate type (E-type) viscometer, and as a result, the viscosity was 15.6 mPa·s.

Inkjet ink 8 was used, and substrate 8 on which a 2.0 µm-thick cured film was formed was obtained in a manner similar to the operations in Example 1.

### Evaluation of an inkjet ink and a patterned cured film

Then, jettability and photocurability of inkjet inks 1 to 8 obtained as described above, and adhesion of the cured film with a substrate and heat resistance (glass transition temperature) were evaluated.

Each test method and evaluation criterion is as described below, and the results of the evaluation are presented in Table 1.

### (Test of jettability of an ink)

Jettability of an ink was evaluated by visually observing a pattern disorder and a faint print on a 3 cm × 3 cm square pattern on substrates (1 to 8) obtained in each Example and Comparative Example. The evaluation criteria are as described below.
Excellent: neither pattern disorder nor faint print at all.
Good: almost no pattern disorder and almost no faint print.
Marginal: a number of pattern disorders and faint prints.
Bad: no ink jetting (more specifically, no pattern formation).

### (Test of photocurability)

Surfaces of substrates (1 to 8) obtained in each Example and Comparative Example was touched with a finger, and the surface state of the cured film was observed using a microscope. The evaluation criteria are as described below.
Excellent: no finger touch trace remained at all on a surface of a cured film.
Good: almost no finger touch trace remained on a surface of a cured film.
Marginal: a finger touch trace remained on a surface of a cured film.
Bad: no cured film obtained.

### (Test of adhesion of a cured film with a substrate)

A cross-cut peeling test (JIS K5400 (1990)) was conducted using substrates (1 to 8) obtained in each Example and Comparative Example. More specifically, an adhesive tape (Sumitomo 3M Co., Ltd., "polyester tape No. 56: adhesive force; 5.5 N/cm") was adhered on a side of a cured film surface, and then a state of the cured film remaining on the substrate upon peeling off the tape was observed by a microscope, and thus adhesion of the cured film with the substrate was evaluated. In addition, judgment was expressed in terms of the number of cross-cuts that are not peeled off among 100 cross-cuts. More specifically, a case where the cured film was not peeled off from the substrate at all was described as 100/100, and a case where the cured film was completely peeled off was described as 0/100.

### Test of heat resistance (glass transition temperature)

Tanδ of a test specimen was measured using DVE-V4 (UBM), and a point at which tanδ was maximized was described as a glass transition temperature of the cured film.

In addition, the test specimen was prepared by applying inkjet inks (1 to 8) obtained in each Example and Comparative Example onto Kapton 200H (trade name; Du Pont-Toray, Inc.) being a polyimide film (50 µm in thickness) using an applicator (film thickness about 100 µm), and peeling off a cured film obtained by carrying out UV exposure (1,000 mJ/cm²) from the polyimide film, and cutting the film into a specimen having a dimension of 5 mm × 22 mm. A light source used for UV exposure was a metal halide lamp, and an exposure amount was measured by Digital UV Intensity Meter UIT-201 attached with Detector UVD-365PD by Ushio, Inc. Measuring conditions of the glass transition temperature were set to a fundamental frequency of 10 Hz, and a heating rate of 5°C/min.

**Table 1**

| | | | | Example 1 | Example 2 | Example 3 | Example 4 | Example 5 | Comparative Example 1 | Comparative Example 2 | Comparative Example 3 |
|---|---|---|---|---|---|---|---|---|---|---|---|
| | | | | Substrate 1 | Substrate 2 | Substrate 3 | Substrate 4 | Substrate 5 | Substrate 6 | Substrate 7 | Substrate 8 |
| FA-513AS | A | a-1 | Weight (g) | 3 | | | 3 | 3 | 6 | | 3 |
| FA-511 AS | | | | | 3 | | | | | | |
| IB-XA | | | | | | 3 | | | | | |
| CH-MA | | a-2 | | 3 | 3 | 3 | 2 | 3 | | 6 | |
| THF-MA | | | | | | | 1 | | | | 3 |
| IRR214-K | B | | | 2.5 | 2.5 | 2.5 | 2.5 | | 2.5 | 2.5 | 2.5 |
| M210 | | | | | | | | 2.5 | | | |
| IRUGACU RE 379 | C | | | 1.2 | 1.2 | 1.2 | 1.2 | 1.2 | 1.2 | 1.2 | 1.2 |
| Viscosity | (mPa·s) | | | 15.7 | 15.8 | 14.1 | 15.7 | 23.3 | 38.7 | 8.0 | 15.6 |
| Film thickness | (µm) | | | 2.0 | 2.1 | 1.9 | 2.0 | 2.2 | 2.2 | 1.8 | 2.0 |
| Jettability | | | | Excellent | Excellent | Excellent | Excellent | Excellent | Good | Excellent | Excellent |
| Photocurability | | | | Excellent | Excellent | Excellent | Excellent | Excellent | Excellent | Good | Excellent |
| Adhesion | | | | 100/100 | 100/100 | 100/100 | 100/100 | 100/100 | 0/100 | 100/100 | 0/100 |
| Glass transition temperature | (°C) | | | 128 | 130 | 141 | 114 | 112 | 165 | 85 | 105 |

Abbreviations in Table are as described below.
- FA-513AS: dicyclopentanyl acrylate
- FA-511AS: dicyclopentenyl acrylate
- IB-XA: isobornyl acrylate
- CH-MA: cyclohexyl methacrylate
- THF-MA: tetrahydrofurfuryl methacrylate
- IRR214-K: tricyclodecane dimethanol diacrylate
- M210: bisphenol A ethylene oxide-modified diacrylate
- IRGACURE 379: 2-(4-methylbenzyl)-2-(dimethylamino)-1-(4-morpholinophenyl)bu tane-1-one

The results presented in Table 1 clearly show that no pattern disorder and no faint print were observed in substrates 1 to 5, and jettability of the ink of the invention was satisfactory.

Moreover, the substrates 1 to 5 had no finger touch trace remaining on the surface of the substrate and curability of the film was satisfactory.

With regard to adhesion, the substrates 1 to 5 had almost no change of the cured film even after the evaluation and adhesion with the substrate was satisfactory. However, with regard to all of the substrates 6 and 8, all of the films were peeled off by the adhesive tape.

Glass transition temperature of the cured film obtained from inkjet inks 1 to 5 exceeded 100°C, and heat resistance was satisfactory. Consequently, the cured film of the invention is suitably used for producing the electronic circuit board, the solar cell substrate or the like. However, glass transition temperature of the cured film obtained from ink 7 was less than 100°C, and heat resistance was low.

### Industrial Applicability

According to the invention, a photocurable inkjet ink that is excellent in ink jettability and curability, and also allows formation of a cured film that is excellent in adhesion with a substrate and heat resistance can be obtained. Consequently, the cured film obtained by photocuring the ink can be suitably used for a protective film or insulating film in an electronic circuit substrate such as a printed wiring board, a semiconductor package substrate and a solar cell substrate.

## Claims

1. A photocurable inkjet ink, comprising a monofunctional polymerizable monomer component (A) comprising a monofunctional polymerizable monomer (a-1) having a condensed cyclic hydrocarbon group or polycyclic hydrocarbon group, and a monofunctional polymerizable monomer (a-2) having a non-aromatic monocyclic hydrocarbon group, and a polymerization initiator (C).

2. The photocurable inkjet ink according to claim 1, further comprising a polyfunctional polymerizable monomer (B).

3. The photocurable inkjet ink according to claim 1 or 2, wherein the monomer (a-1) includes a monofunctional polymerizable monomer having a 7-50C organic group having a condensed cyclic hydrocarbon group or polycyclic hydrocarbon group.

4. The photocurable inkjet ink according to any one of claims 1 to 3, wherein the monomer (a-1) includes a monofunctional polymerizable monomer represented by formula (1) below: 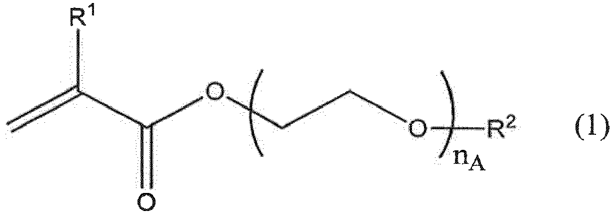 wherein, in formula (1), R¹ is hydrogen or methyl, R² is a monovalent 7-30C organic group having a condensed cyclic hydrocarbon group or polycyclic hydrocarbon group, and n_{A} is an integer from 0 to 10.

5. The photocurable inkjet ink according to claim 4, wherein R² in formula (1) above is a group represented by any one of formulas (2) to (5) below: 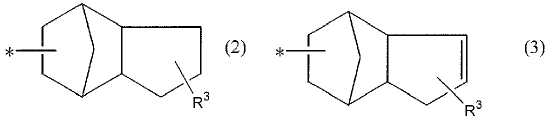 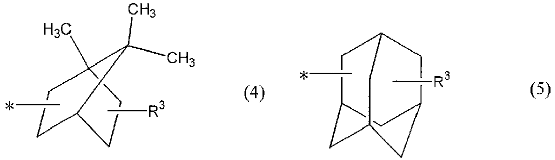 wherein, in formulas (2) to (5), R³ is each independently hydrogen or alkyl having 1 to 6 carbons, and a symbol * is a bonding hand.

6. The photocurable inkjet ink according to any one of claims 1 to 5, wherein the monomer (a-2) includes a monofunctional polymerizable monomer having a 4-50C organic group having a monocyclic hydrocarbon group.

7. The photocurable inkjet ink according to any one of claims 1 to 6, wherein the monomer (a-2) includes a monofunctional polymerizable monomer represented by formula (6) below: 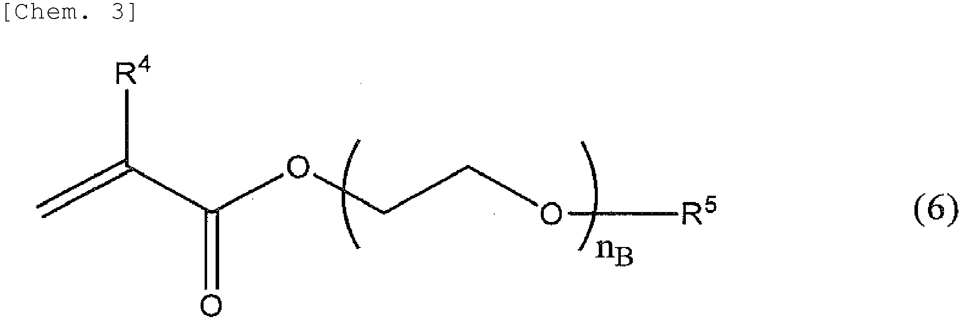 wherein, in formula (6), R⁴ is hydrogen or methyl, R⁵ is a monovalent 4-30C organic group having a monocyclic hydrocarbon group, and n_{B} is an integer from 0 to 10.

8. The photocurable inkjet ink according to claim 7, wherein R⁵ in formula (6) above is a group represented by formula (7) below: 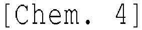 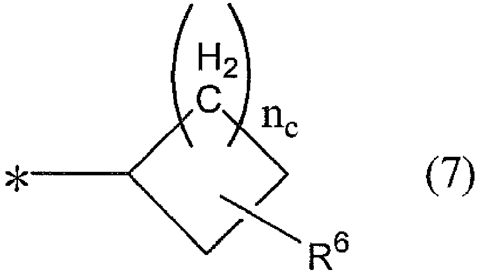 wherein, in formula (7), R⁶ is hydrogen or alkyl having 1 to 6 carbons, n_{C} is an integer from 1 to 21, and a symbol * is a bonding hand.

9. The photocurable inkjet ink according to claim 7 or 8, wherein R⁵ in formula (6) above is a group represented by formula (8) below: 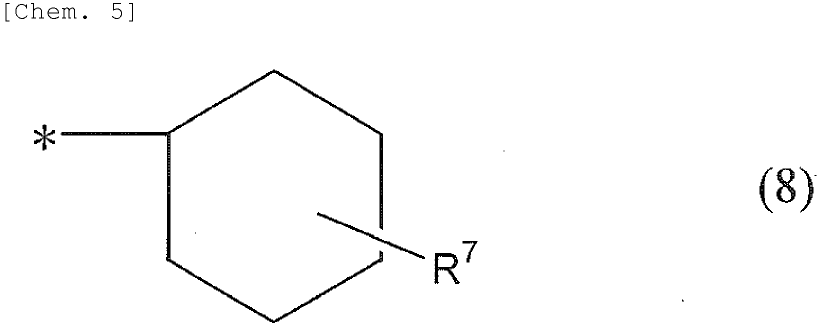 wherein, in formula (8), R⁷ is hydrogen or alkyl having 1 to 6 carbons, and a symbol * is a bonding hand.

10. The photocurable inkjet ink according to any one of claims 2 to 9, wherein the monomer (B) is at least one kind of compounds selected from tricyclodecane dimethanol di(meth)acrylate, bisphenol F ethylene oxide-modified di(meth)acrylate, bisphenol A ethylene oxide-modified di(meth)acrylate, isocyanuric acid ethylene oxide-modified di(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, dipentaerythritol hexa(meth)acrylate, trimethylolpropane tri(meth)acrylate, ethylene oxide-modified trimethylolpropane tri(meth)acrylate, propylene oxide-modified trimethylolpropane tri(meth)acrylate, caprolactone-modified dipentaerythritol hexa(meth)acrylate, ethylene oxide-modified phosphoric acid tri(meth)acrylate, tris[(meth)acryloxyethyl]isocyanurate, caprolactone-modified tris[(meth)acryloxyethyl]isocyanurate, a compound represented by formula (9) below and a compound represented by formula (10) below: 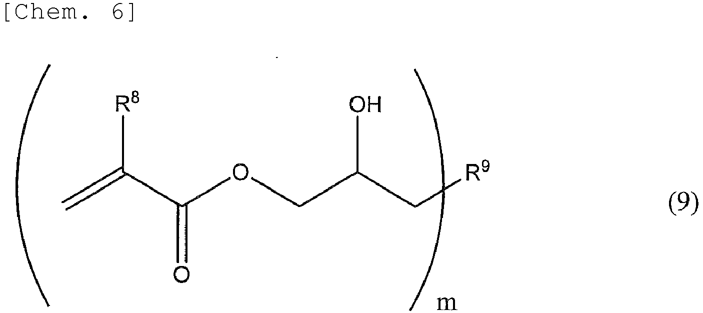 wherein, in formula (9), R⁸ is hydrogen or methyl, R⁹ is an m-valent organic group, and m is an integer from 2 to 10: 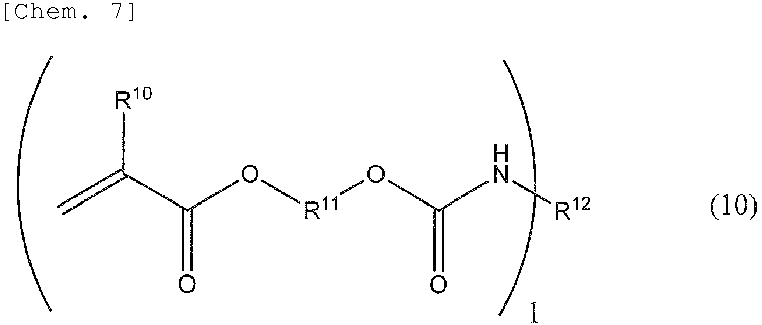 wherein, in formula (10), R¹⁰ is hydrogen or methyl, R¹¹ is a divalent organic group, R¹² is a l-valent organic group, and l is an integer from 2 to 20.

11. The photocurable inkjet ink according to any one of claims 1 to 10, wherein the polymerization initiator (C) is at least one kind of compounds selected from the group of 1-hydroxycyclohexyl phenyl ketone, 2-methyl-1-[4-(methylthio)phenyl]-2-morpholinopropane-1-one, 2-benzyl-2-dimethylamino-1-(4-morpholinophenyl)-1-butanone, 2-hydroxy-1-{4-[4-(2-hydroxy-2-methyl-propionyl)-benzyl]pheny l}-2-methyl-propane-1-one, 2,2-dimethoxy-1,2-diphenylethane-1-one, bis(2,4,6-trimethylbenzoyl)phenylphosphine oxide, 2,4,6-trimethylbenzoyldiphenylphosphine oxide, 2-hydroxy-2-methyl-1-phenyl-propane-1-one, 1-[4-(2-hydroxyethoxy)-phenyl]-2-hydroxy-2-methyl-1-propane-1 -one, 2-(4-methylbenzyl)-2-(dimethylamino)-1-(4-morpholinophenyl)bu tane-1-one, a mixture of oxy-phenyl-acetic acid 2-[2-oxo-2-phenyl-acetoxy-ethoxy]-ethyl ester and oxy-phenyl-acetic acid 2-[2-hydroxy-ethoxy]-ethyl ester, 1-[4-(phenylthio)phenyl]-1,2-octanedione 2-(O-benzoyloxime)], 1-[9-ethyl-6-(2-methylbenzoyl)-9H-carbazole-3-yl]-ethanone 1-(O-acetyloxime) and methyl benzoylformate.

12. The photocurable inkjet ink according to any one of claims 2 to 11, wherein the component (A) comprises at least one kind of compounds selected from the group of compounds represented by formulas (11) to (14) below, and cyclohexyl (meth)acrylate, the monomer (B) is at least one kind of compounds selected from the group of bisphenol F ethylene oxide-modified di (meth) acrylate, bisphenol A ethylene oxide-modified di(meth)acrylate, trimethylolpropane tri(meth)acrylate and tricyclodecane dimethanol di(meth)acrylate, and
the polymerization initiator (C) is 2-(4-methylbenzyl)-2-(dimethylamino)-1-(4-morpholinophenyl)bu tane-1-one: 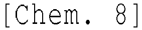 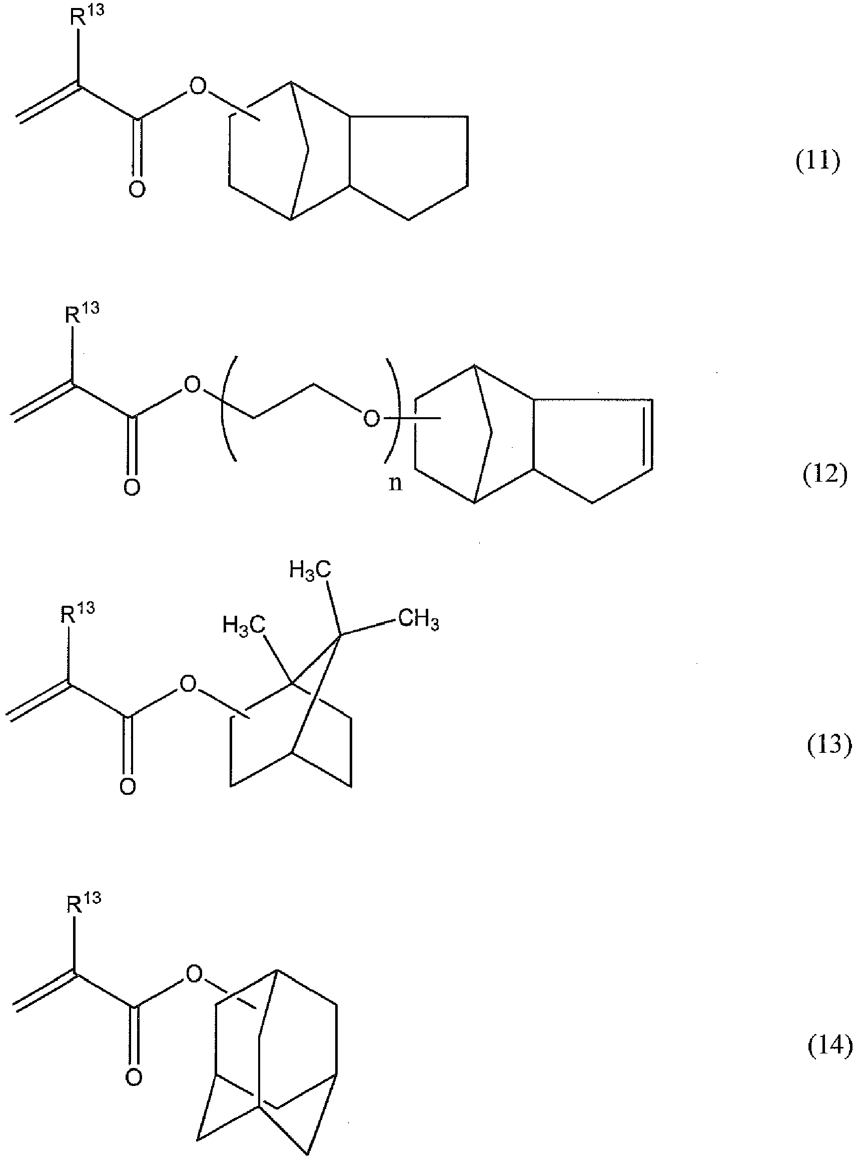 wherein, in formulas (11) to (14), R¹³ is hydrogen or methyl and n is 0 or 1.

13. The photocurable inkjet ink according to claim 12, wherein the component (A) further comprises at least one kind of compounds selected from the group of tetrahydrofurfuryl (meth)acrylate and n-butyl (meth)acrylate.

14. The photocurable inkjet ink according to any one of claims 2 to 13, wherein, based on 100% by weight of a sum of weight of component (A), monomer (B) and polymerization initiator (C), component (A) is contained in an amount of 30 to 80% by weight, monomer (B) is contained in an amount of 10 to 55% by weight, and polymerization initiator (C) is contained in an amount of 1 to 35% by weight.

15. The photocurable inkjet ink according to any one of claims 2 to 14, wherein, based on 100% by weight of a sum of weight of component (A), monomer (B) and polymerization initiator (C), component (A) is contained in an amount of 40 to 75% by weight, monomer (B) is contained in an amount of 15 to 50% by weight, and polymerization initiator (C) is contained in an amount of 5 to 30% by weight.

16. A cured film, obtained by curing the photocurable inkjet ink according to any one of claims 1 to 15.

17. An electronic circuit substrate, comprising the cured film according to claim 16.

18. A method for producing an electronic circuit substrate, comprising:
(step 1) a step for applying the photocurable inkjet ink according to any one of claims 1 to 15 on a substrate according to an inkjet method to form a coating film; and
(step 2) a step for irradiating the coating film obtained in step 1 with light to cure the coating film and to form a cured film on the substrate.

19. An electronic circuit substrate produced by the method for producing the same according to claim 18.

20. The electronic circuit substrate according to claim 17 or 19, wherein the electronic circuit substrate includes a solar cell substrate.

## Patentansprüche

1. Lichthärtbare Tintenstrahl-Tinte, umfassend eine monofunktionelle polymerisierbare Monomerkomponente (A), die ein monofunktionelles polymerisierbares Monomer (a-1) mit einer kondensierten zyklischen Kohlenwasserstoffgruppe oder polyzyklischen Kohlenwasserstoffgruppe sowie ein monofunktionelles polymerisierbares Monomer (a-2) mit einer nichtaromatischen monozyklischen Kohlenwasserstoffgruppe umfasst, sowie einen Polymerisationsinitiator (C).

2. Lichthärtbare Tintenstrahl-Tinte nach Anspruch 1, die des Weiteren ein polyfunktionelles polymerisierbares Monomer (B) umfasst.

3. Lichthärtbare Tintenstrahl-Tinte nach Anspruch 1 oder 2, wobei das Monomer (a-1) ein monofunktionelles polymerisierbares Monomer umfasst, das eine organische Gruppe mit 7-50 C mit einer kondensierten zyklischen Kohlenwasserstoffgruppe oder polyzyklischen Kohlenwasserstoffgruppe umfasst.

4. Lichthärtbare Tintenstrahl-Tinte nach einem der Ansprüche 1 bis 3, wobei das Monomer (a-1) ein monofunktionelles polymerisierbares Monomer der nachstehenden Formel (1) umfasst: 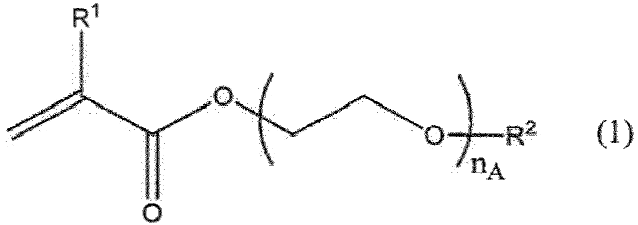 wobei in Formel (1) R¹ Wasserstoff oder Methyl ist, R² eine einwertige organische Gruppe mit 7-30 C mit einer kondensierten zyklischen Kohlenwasserstoffgruppe oder polyzyklischen Kohlenwasserstoffgruppe ist und n_{A} eine ganze Zahl von 0 bis 10 ist.

5. Lichthärtbare Tintenstrahl-Tinte nach Anspruch 4, wobei R² in obiger Formel (1) eine Gruppe gemäß einer der nachstehenden Formeln (2) bis (5) ist: 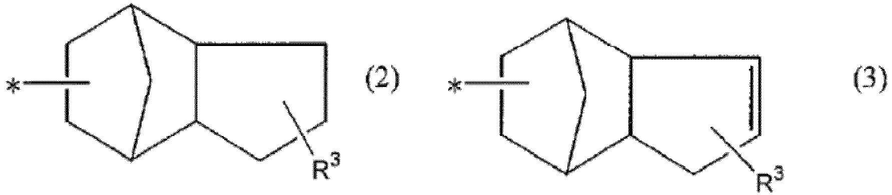 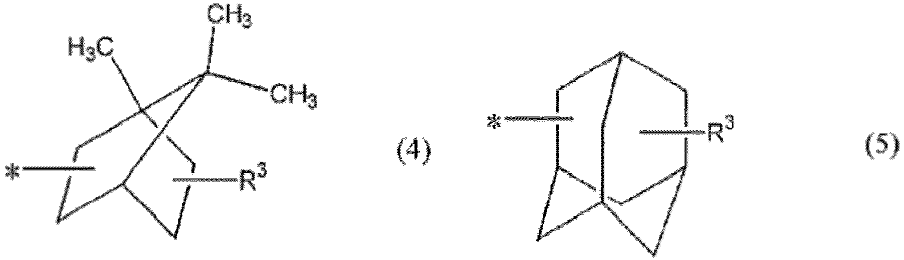 wobei in den Formeln (2) bis (5) R³ jeweils unabhängig Wasserstoff oder Alkyl mit 1 bis 6 Kohlenstoffatomen ist und das Symbol * ein Bindungsarm ist.

6. Lichthärtbare Tintenstrahl-Tinte nach einem der Ansprüche 1 bis 5, wobei das Monomer (a-2) ein monofunktionelles polymerisierbares Monomer umfasst, das eine organische Gruppe mit 4-50 C und einer monozyklischen Kohlenwasserstoffgruppe aufweist.

7. Lichthärtbare Tintenstrahl-Tinte nach einem der Ansprüche 1 bis 6, wobei das Monomer (a-2) ein monofunktionelles polymerisierbares Monomer der nachstehenden Formel (6) umfasst: 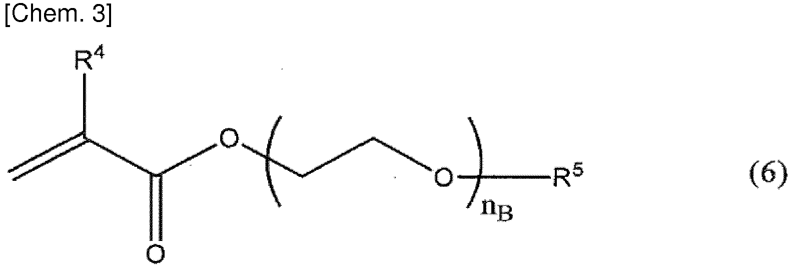 wobei in Formel (6) R⁴ Wasserstoff oder Methyl ist, R⁵ eine einwertige organische Gruppe mit 4-30 C und einer monozyklischen Kohlenwasserstoffgruppe ist und n_{B} eine ganze Zahl von 0 bis 10 ist.

8. Lichthärtbare Tintenstrahl-Tinte nach Anspruch 7, wobei R⁵ in obiger Formel (6) eine Gruppe der nachstehenden Formel (7) ist: 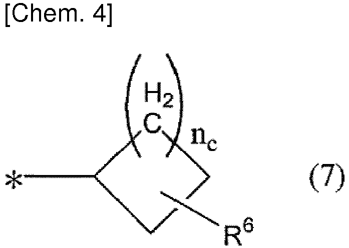 wobei in Formel (7) R⁶ Wasserstoff oder Alkyl mit 1 bis 6 Kohlenstoffatomen ist, n_{C} eine ganze Zahl von 1 bis 21 ist und das Symbol * ein Bindungsarm ist.

9. Lichthärtbare Tintenstrahl-Tinte nach Anspruch 7 oder 8, wobei R⁵ in obiger Formel (6) eine Gruppe der nachstehenden Formel (8) ist: 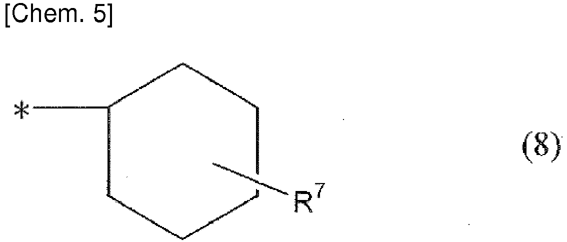 wobei in Formel (8) R⁷ Wasserstoff oder Alkyl mit 1 bis 6 Kohlenstoffatomen ist und das Symbol * ein Bindungsarm ist.

10. Lichthärtbare Tintenstrahl-Tinte nach einem der Ansprüche 2 bis 9, wobei das Monomer (B) zumindest eine Art von Verbindungen ist, die aus Tricyclodecandimethanoldi(meth)acrylat, Bisphenol-F-Ethylenoxid-modifiziertem Di(meth)acrylat, Bisphenol-A-Ethylenoxid-modifiziertem Di(meth)acrylat, Isocyanursäure-Ethylenoxid-modifiziertem Di(meth)acrylat, Pentaerythrittri(meth)acrylat, Pentaerythrittetra(meth)-acrylat, Dipentaerythrittri(meth)acrylat, Dipentaerythrittetra(meth)acrylat, Dipentaerythritpenta(meth)acrylat, Dipentaerythrithexa(meth)acrylat, Trimethylolpropantri-(meth)acrylat, Ethylenoxid-modifiziertem Trimethylolpropantri(meth)acrylat, Propylenoxid-modifiziertem Trimethylolpropantri(meth)acrylat, Caprolacton-modifiziertem Dipentaerythrithexa(meth)acrylat, Ethylenoxid-modifiziertem Phosphorsäuretri(meth)-acrylat, Tris[(meth)acryloxyethyl]isocyanurat, Caprolacton-modifiziertem Tris[(meth)-acryloxyethyl]isocyanurat, einer Verbindung der nachstehenden Formel (9) und einer Verbindung der nachstehenden Formel (10) ausgewählt sind: 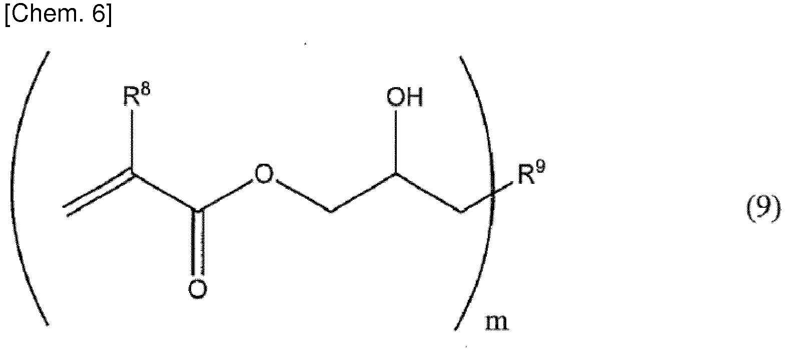 wobei in Formel (9) R⁸ Wasserstoff oder Methyl ist, R⁹ eine m-wertige organische Gruppe ist und m eine ganze Zahl von 2 bis 10 ist; 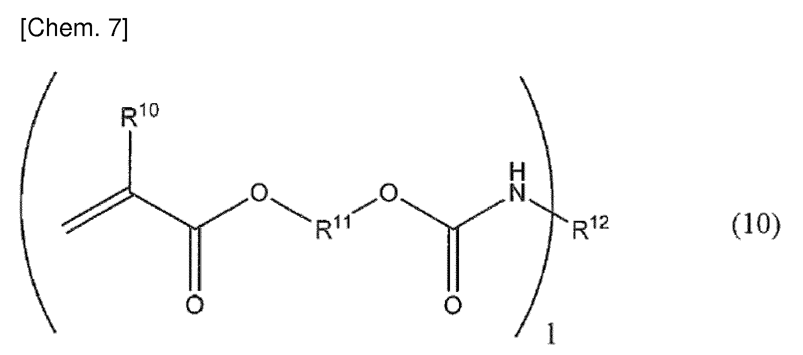 wobei in Formel (10) R¹⁰ Wasserstoff oder Methyl ist, R¹¹ eine zweiwertige organische Gruppe ist, R¹² eine I-wertige organische Gruppe ist und I eine ganze Zahl von 2 bis 20 ist.

11. Lichthärtbare Tintenstrahl-Tinte nach einem der Ansprüche 1 bis 10, wobei der Polymerisationsinitiator (C) zumindest eine Art von Verbindungen ist, die aus der Gruppe aus 1-Hydroxycyclohexylphenylketon, 2-Methyl-1-[4-(methylthio)phenyl]-2-morpholinopropan-1on, 2-Benzyl-2-dimethylamino-1-(4-morpholinophenyl)-1-butanon, 2-Hydroxy-1-{4-[4-(2-hydroxy-2-methylpropionyl)benzyl]phenyl}-2-methylpropan-1-on, 2,2-Dimethoxy-1,2-diphenylethan-1-on, Bis(2,4,6-trimethylbenzoyl)-phenylphosphinoxid, 2-Hydroxy-2-methyl-1-phenyl-propan-1-on, 1-[4-(2-Hydroxyethoxy)-phenyl]-2-hydroxy-2-methyl-1-propan-1-on, 2-(4-Methylbenzyl)-2-(dimethylamino)-1-(4-morpholinophenyl)butan-1-on, einem Gemisch aus Oxyphenylessigsäure-2-[2-oxo-2-phenylacetoxyethoxy]ethylester und Oxyphenylessigsäure-2-[2-hydroxyethoxy]ethylester, 1-[4-(Phenylthio)phenyl]-1,2-octandion-2-(O-benzoyloxim)], 1-[9-Ethyl-6-(2-methylbenzoyl)-9H-carbazol-3-yl]-ethanon-1-(O-acetyloxim) und Methylbenzoylformiat ausgewählt sind.

12. Lichthärtbare Tintenstrahl-Tinte nach einem der Ansprüche 2 bis 11, wobei die Komponente (A) zumindest eine Art von Verbindungen, die aus der Gruppe von Verbindungen der nachstehenden Formeln (11) bis (14) ausgewählt sind, und Cyclohexyl(methacrylat) umfasst, das Monomer (B) zumindest eine Art von Verbindungen ist, die aus der Gruppe von Bishpenol-F-Ethylenoxid-modifiziertem Di(meth)acrylat, Bisphenol-A-Ethylenoxid-modifiziertem Di(meth)acrylat, Trimethylolpropantri(meth)-acrylat und Tricyclodecandimethanoldi(meth)acrylat ausgewält sind, und der Polymerisationsinitiator (C) 2-(4-Methylbenzyl)-2-(dimethylamino)-1-(4-morphonlinophenyl)butan-1-on ist: 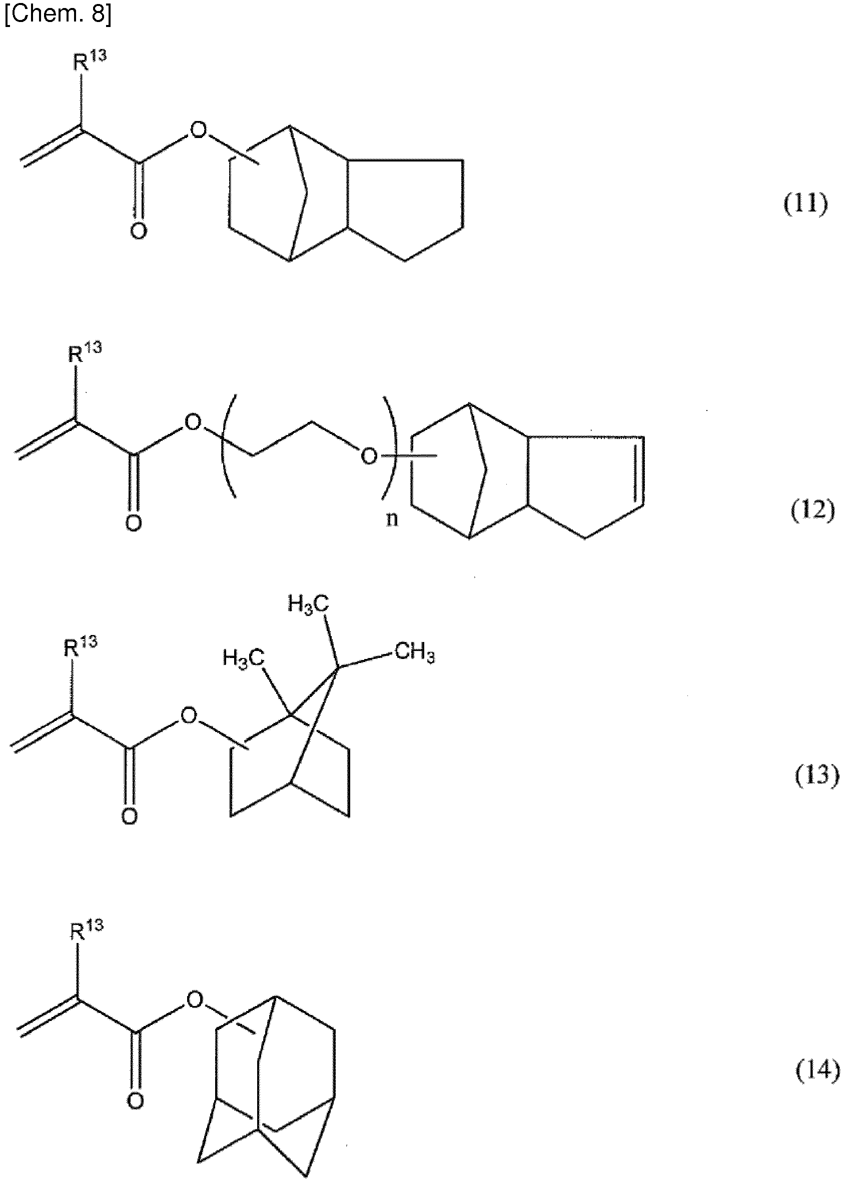 wobei in den Formeln (11) bis (14) R¹³ Wasserstoff oder Methyl ist und n = 0 oder 1 ist.

13. Lichthärtbare Tintenstrahl-Tinte nach Anspruch 12, wobei die Komponente (A) des Weiteren zumindest eine Art von Verbindung umfasst, die aus der Gruppe aus Tetrahydrofurfuryl(meth)acrylat und n-Butyl(meth)acrylat ausgewählt ist.

14. Lichthärtbare Tintenstrahl-Tinte nach einem der Ansprüche 2 bis 13, wobei, bezogen auf 100 Gew.-% der Gewichtssumme der Komponente (A), des Monomers (B) und des Polymerisationsinitiators (C), die Komponente (A) in einer Menge von 30 bis 80 Gew.-% enthalten ist, das Monomer (B) in einer Menge von 10 bis 55 Gew.-% enthalten ist, und der Polymerisationsinitiator (C) in einer Menge von 1 bis 35 Gew.-% enthalten ist.

15. Lichthärtbare Tintenstrahl-Tinte nach einem der Ansprüche 2 bis 14, wobei, bezogen auf 100 Gew.-% der Gewichtssumme der Komponente (A), des Monomers (B) und des Polymerisationsinitiators (C), die Komponente (A) in einer Menge von 40 bis 75 Gew.-% enthalten ist, das Monomer (B) in einer Menge von 15 bis 50 Gew.-% enthalten ist, und der Polymerisationsinitiator (C) in einer Menge von 5 bis 30 Gew.-% enthalten ist.

16. Gehärteter Film, erhalten durch Härten einer lichthärtbaren Tintenstrahl-Tinte nach einem der Ansprüche 1 bis 15.

17. Substrat für einen elektronischen Schaltkreis, das einen gehärteten Film nach Anspruch 16 umfasst.

18. Verfahren zur Herstellung eines Substrats für einen elektronischen Schaltkreis, umfassend:
(Schritt 1) einen Schritt des Auftragens einer lichthärtbaren Tintenstrahl-Tinte nach einem der Ansprüche 1 bis 15 auf ein Substrat durch ein Tintenstrahlverfahren, um einen Beschichtungsfilm auszubilden; und
(Schritt 2) einen Schritt des Bestrahlens des in Schritt 1 erhaltenen Beschichtungsfilms mit Licht, um den Beschichtungsfilm zu härten und einen gehärteten Film auf dem Substrat auszubilden.

19. Substrat für einen elektronischen Schaltkreis, hergestellt durch ein Verfahren zur Herstellung desselben nach Anspruch 18.

20. Substrat für einen elektronischen Schaltkreis nach Anspruch 17 oder 19, wobei das Substrat für einen elektronischen Schaltkreis ein Solarzellensubstrat umfasst.

## Revendications

1. Encre pour jet d'encre photodurcissable, comprenant un composant monomère polymérisable monofonctionnel (A) comprenant un monomère polymérisable monofonctionnel (a-1) ayant un groupe hydrocarboné cyclique condensé ou un groupe hydrocarboné polycyclique, et un monomère polymérisable monofonctionnel (a-2) ayant un groupe hydrocarboné monocyclique non aromatique, et un amorceur de polymérisation (C).

2. Encre pour jet d'encre photodurcissable selon la revendication 1, comprenant en outre le monomère polymérisable polyfonctionnel (B).

3. Encre pour jet d'encre photodurcissable selon la revendication 1 ou 2, dans laquelle le monomère (a-1) comprend un monomère polymérisable monofonctionnel ayant un groupe organique de 7 à 50 carbones ayant un groupe hydrocarboné cyclique condensé ou un groupe hydrocarboné polycyclique.

4. Encre pour jet d'encre photodurcissable selon l'une quelconque des revendications 1 à 3, dans laquelle le monomère (a-1) comprend un monomère polymérisable monofonctionnel représenté par la formule (1) ci-dessous : 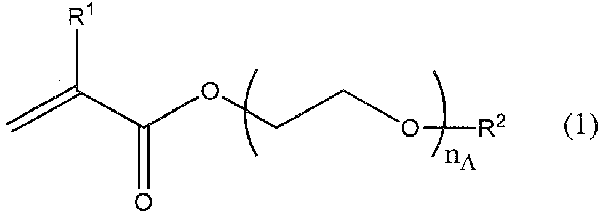 où, dans la formule (1), R¹ est l'hydrogène ou méthyle, R² est un groupe organique monovalent de 7 à 30 carbones ayant un groupe hydrocarboné cyclique condensé ou un groupe hydrocarboné polycyclique, et n_{A} est un entier de 0 à 10.

5. Encre pour jet d'encre photodurcissable selon la revendication 4, dans laquelle R² dans la formule (1) ci-dessus est un groupe représenté par l'une quelconque des formules (2) à (5) ci-dessous : 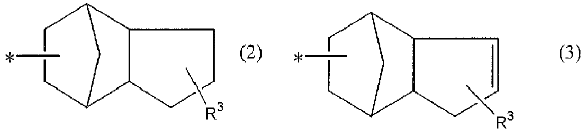 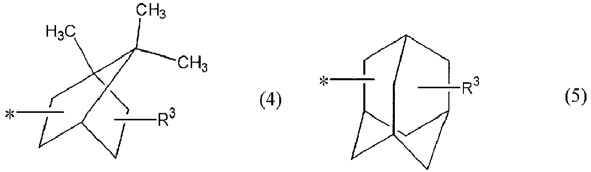 où, dans les formules (2) à (5), chaque R³ est indépendamment l'hydrogène ou un alkyle ayant 1 à 6 carbones, et le symbole * est un bras de liaison.

6. Encre pour jet d'encre photodurcissable selon l'une quelconque des revendications 1 à 5, dans laquelle le monomère (a-2) comprend un monomère polymérisable monofonctionnel ayant un groupe organique de 4 à 50 carbones ayant un groupe hydrocarboné monocyclique.

7. Encre pour jet d'encre photodurcissable selon l'une quelconque des revendications 1 à 6, dans laquelle le monomère (a-2) comprend un monomère polymérisable monofonctionnel représenté par la formule (6) ci-dessous : 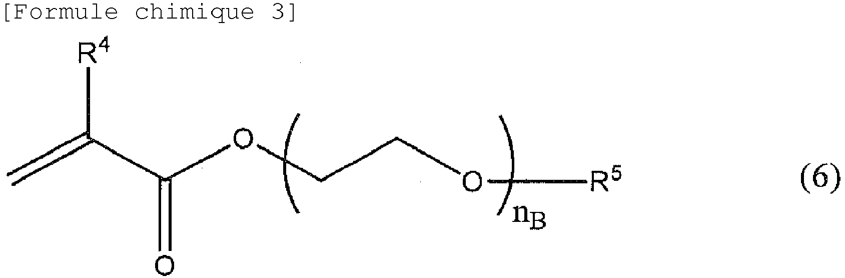 où, dans la formule (6), R⁴ est l'hydrogène ou méthyle, R⁵ est un groupe organique monovalent de 4 à 30 carbones ayant un groupe hydrocarboné monocyclique, et n_{B} est un entier de 0 à 10.

8. Encre pour jet d'encre photodurcissable selon la revendication 7, dans laquelle R⁵ dans la formule (6) ci-dessus est un groupe représenté par la formule (7) ci-dessous : 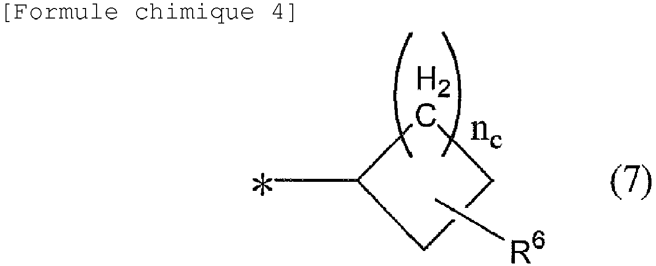 où, dans la formule (7), R⁶ est l'hydrogène ou un alkyle ayant 1 à 6 carbones, n_{C} est un entier de 1 à 21, et le symbole * est un bras de liaison.

9. Encre pour jet d'encre photodurcissable selon la revendication 7, dans laquelle R⁵ dans la formule (6) ci-dessus est un groupe représenté par la formule (8) ci-dessous : 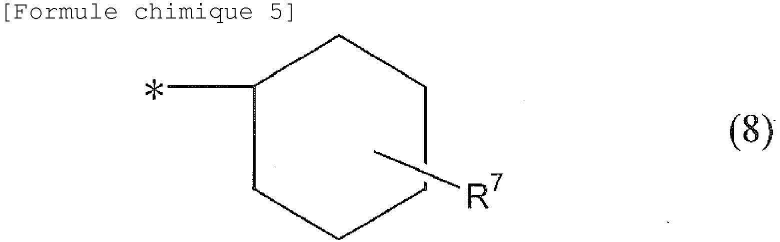 où, dans la formule (8), R⁷ est l'hydrogène ou un alkyle ayant 1 à 6 carbones, et le symbole * est un bras de liaison.

10. Encre pour jet d'encre photodurcissable selon l'une quelconque des revendications 2 à 9, dans laquelle le monomère (B) est au moins un type de composé choisi parmi le di(méth)acrylate de tricyclodécanediméthanol, le di(méth)acrylate de bisphénol F oxyéthyléné, le di(méth)acrylate de bisphénol A oxyéthyléné, le di(méth)acrylate d'acide isocyanurique oxyéthyléné, le tri(méth)acrylate de pentaérythritol, le tétra(méth)acrylate de pentaérythritol, le tri(méth)acrylate de dipentaérythritol, le tétra(méth)acrylate de dipentaérythritol, le penta(méth)acrylate de dipentaérythritol, l'hexa(méth)acrylate de dipentaérythritol, le tri(méth)acrylate de triméthylolpropane, le tri(méth)acrylate de triméthylolpropane oxyéthyléné, le tri(méth)acrylate de triméthylolpropane oxypropyléné, l'hexa(méth)acrylate de dipentaérythritol modifié par une caprolactone, le tri(méth)acrylate d'acide phosphorique oxyéthyléné, l'isocyanurate de tris[(méth)acryloxyéthyle], l'isocyanurate de tris[(méth)acryloxyéthyle] modifié par une caprolactone, un composé représenté par la formule (9) ci-dessous et un composé représenté par la formule (10) ci-dessous : 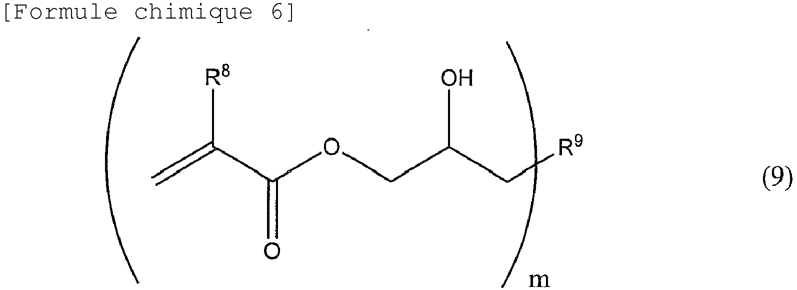 où, dans la formule (9), R⁸ est l'hydrogène ou méthyle, R⁹ est un groupe organique de valence m, et m est un entier de 2 à 10 ; 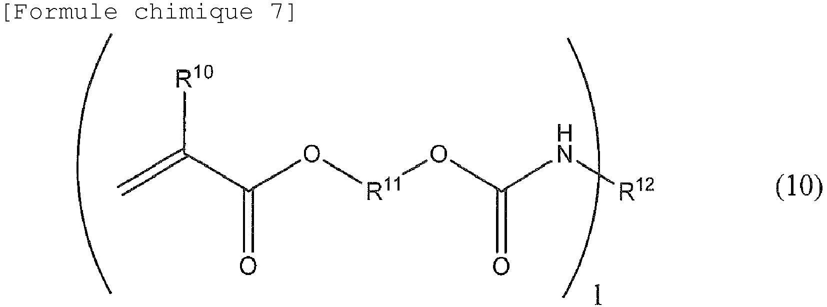 où, dans la formule (10), R¹⁰ est l'hydrogène ou méthyle, R¹¹ est un groupe organique divalent, R¹² est un groupe organique de valence l, et l est un entier de 2 à 20.

11. Encre pour jet d'encre photodurcissable selon l'une quelconque des revendications 1 à 10, dans laquelle l'amorceur de polymérisation (C) est au moins un type de composé choisi dans l'ensemble comprenant la 1-hydroxycyclohexylphénylcétone, la 2-méthyl-1-[4-(méthylthio)phényl]-2-morpholinopropan-1-one, la 2-benzyl-2-diméthylamino-1-(4-morpholinophényl)-1-butanone, la 2-hydroxy-1-{4-[4-(2-hydroxy-2-méthylpropionyl)benzyl]phényl}-2-méthylpropan-1-one, la 2,2-diméthoxy-1,2-diphényléthan-1-one, l'oxyde de bis(2,4,6-triméthylbenzoyl)phénylphosphine, l'oxyde de 2,4,6-triméthylbenzoyldiphénylphosphine, la 2-hydroxy-2-méthyl-1-phénylpropan-1-one, la 1-[4-(2-hydroxyéthoxy)phényl]-2-hydroxy-2-méthyl-1-propan-1-one, la 2-(4-méthylbenzyl)-2-(diméthylamino)-1-(4-morpholinophényl)butan-1-one, un mélange d'ester 2-[2-oxo-2-phénylacétoxyéthoxy]éthylique d'acide oxyphénylacétique et d'ester 2-[2-hydroxyéthoxy]éthylique d'acide oxyphénylacétique, la 1-[4-(phénylthio)phényl]-1,2-octadione-2-(O-benzoyloxime)], la 1-[9-éthyl-6-(2-méthylbenzoyl)-9H-carbazol-3-yl]éthanone-1-(O-acétyloxime) et le benzoylformiate de méthyle.

12. Encre pour jet d'encre photodurcissable selon l'une quelconque des revendications 2 à 11, dans laquelle le composant (A) comprend au moins un type de composé choisi dans l'ensemble comprenant les composés représentés par les formules (11) à (14) ci-dessous, et le (méth)acrylate de cyclohexyle, le monomère (B) est au moins un type de composé choisi dans l'ensemble comprenant le di(méth)acrylate de bisphénol F oxyéthyléné, le di(méth)acrylate de bisphénol A oxyéthyléné, le tri(méth)acrylate de triméthylolpropane et le di(méth)acrylate de tricyclodécanediméthanol, et l'amorceur de polymérisation (C) est la 2-(4-méthylbenzyl)-2-(diméthylamino)-1-(4-morpholinophényl)butan-1-one : 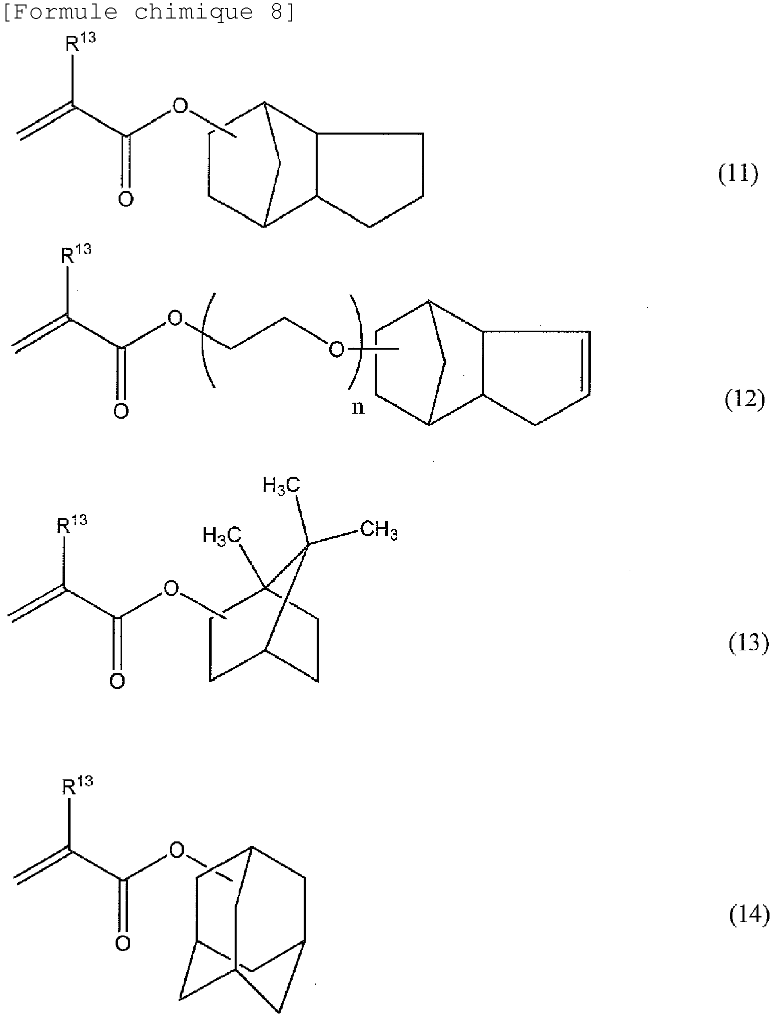 où, dans les formules (11) à (14), R¹³ est l'hydrogène ou méthyle et n vaut 0 ou 1.

13. Encre pour jet d'encre photodurcissable selon la revendication 12, dans laquelle le composant (A) comprend en outre au moins un type de composé choisi dans le groupe comprenant le (méth)acrylate de tétrahydrofurfuryle et le (méth)acrylate de n-butyle.

14. Encre pour jet d'encre photodurcissable selon l'une quelconque des revendications 2 à 13, dans laquelle, pour 100 % en poids de la somme en poids du composant (A), du monomère (B) et de l'amorceur de polymérisation (C), le composant (A) est contenu en une quantité de 30 à 80 % en poids, le monomère (B) est contenu en une quantité de 10 à 55 % en poids, et l'amorceur de polymérisation (C) est contenu en une quantité de 1 à 35 % en poids.

15. Encre pour jet d'encre photodurcissable selon l'une quelconque des revendications 2 à 14, dans laquelle, pour 100 % en poids de la somme en poids du composant (A), du monomère (B) et de l'amorceur de polymérisation (C), le composant (A) est contenu en une quantité de 40 à 75 % en poids, le monomère (B) est contenu en une quantité de 15 à 50 % en poids, et l'amorceur de polymérisation (C) est contenu en une quantité de 5 à 30 % en poids.

16. Film durci obtenu par durcissement de l'encre pour jet d'encre photodurcissable selon l'une quelconque des revendications 1 à 15.

17. Substrat de circuit électronique comprenant le film durci selon la revendication 16.

18. Procédé pour produire un substrat de circuit électronique, comprenant
(étape 1) une étape pour appliquer l'encre pour jet d'encre photodurcissable selon l'une quelconque des revendications 1 à 15 sur un substrat conformément à un procédé par jet d'encre pour former un film de revêtement ; et
(étape 2) une étape pour irradier le film de revêtement obtenu dans l'étape 1 avec une lumière de manière à durcir le film de revêtement et à former un film durci sur le substrat.

19. Substrat de circuit électronique produit par le procédé pour produire celui-ci selon la revendication 18.

20. Substrat de circuit électronique selon la revendication 17 ou 19, dans lequel le substrat de circuit électronique comprend un substrat de cellule solaire.
